# FASCICULE DE BREVET EUROPEEN

(11) **EP 4 433 792 B1**
(45) Date de publication et mention de la délivrance du brevet: **21.10.2026**
(21) Numéro de dépôt: 22818355.4
(22) Date de dépôt: 17.11.2022
(51) Int. Cl.: G01M 11/02, B29D 11/00

(54) **PROCÉDÉ D'OBTENTION D'UN OUTIL DE CARACTÉRISATION GÉOMÉTRIQUE D'UN OBJECTIF OPTIQUE À FABRIQUER**
VERFAHREN ZUR HERSTELLUNG EINES GEOMETRISCHEN CHARAKTERISIERUNGSWERKZEUGS FÜR EINE OPTISCHE LINSE ZUR HERSTELLUNG
METHOD FOR OBTAINING A GEOMETRIC CHARACTERISATION TOOL FOR AN OPTICAL LENS TO BE MANUFACTURED

(30) Priorité: 19.11.2021 FR 2112266
(43) Date de publication de la demande: 25.09.2024
(73) Titulaire: Fogale Nanotech, 30900 Nîmes (FR)
(72) Inventeur: LEGROS, Eric, 30900 NÎMES (FR); PETITGRAND, Sylvain, 30132 CAISSARGUES (FR); PORQUE, Jérôme, 34280 LA GRANDE MOTTE (FR)
(74) Mandataire: IPAZ
(86) Numéro de dépôt international: PCT/EP2022/082251
(87) Numéro de publication internationale: WO 2023/089016

(56) Documents cités:
- EP-B1- 3 676 677
- WO-A1-2020/245511
- CN-A- 112 484 968
- US-A1- 2021 088 327

## Description

La présente invention concerne un procédé et un dispositif d'obtention d'un modèle de caractérisation géométrique d'un objectif optique à fabriquer, en vue d'estimer au moins un indicateur relatif à la qualité, ou à la performance, dudit objectif optique une fois fabriqué. Elle concerne également un procédé et un système de caractérisation géométrique d'objectifs optiques mettant en œuvre un tel outil de caractérisation géométrique.

Le domaine de l'invention est le domaine de la caractérisation qualitative des objectifs optiques, en particulier avant ou pendant leur fabrication.

### État de la technique

Un objectif optique est constitué par un empilement d'éléments optiques, dans un barillet, dans un ordre donné et suivant une direction d'empilement, également appelé l'axe Z. Les éléments optiques d'un objectif optique, également appelé objectif dans la suite, peuvent être des lentilles optiques convergentes, divergentes, asphériques, ou éventuellement d'autres formes complexes, ou une entretoise, également appelé « spacer » ou en anglais ou « SOMA ^{®} », ou encore des lames ou des filtres.

Les objectifs optiques sont utilisés dans divers appareils, tels que par exemple des caméras, des appareils photos, des Smartphones, etc. pour imager une scène, ou alors en tant que source lumineuse, pour projeter des motifs, éclairer une scène, etc.

Une fois assemblé, l'objectif optique est testé pour déterminer une donnée de performance relative au fonctionnement dudit objectif, principalement pour valider ou non la qualité dudit objectif. Il existe actuellement différentes techniques pour tester un objectif optique après sa fabrication, tel que par exemple la mesure de valeur de MTF (pour « Modulation Transfer Function » en anglais, ou « Fonction de Transfert de Modulation » en français). Plusieurs limitations résultent de cette pratique.

Premièrement, cette pratique nécessite de terminer la fabrication de l'objectif avant de pouvoir avoir une indication sur sa performance. Ainsi, lorsque la performance de l'objectif optique est jugée insatisfaisante, il est souvent mis au rebut, ce qui constitue une perte de temps et de ressources.

Deuxièmement, la performance de l'objectif optique est jugée insatisfaisante, les possibilités d'intervention sur l'empilement d'éléments optiques formant l'objectif optique pour améliorer la performance de l'objectif optique, sont très limitées, voire parfois impossible.

En outre, les techniques actuelles nécessitent de mettre en place des mesures sur l'objectif optique, ce qui est chronophage et ralentit la fabrication de l'objectif optique, car cela nécessite de mettre en pause la fabrication le temps de faire les mesures. Des exemples de procédés et de dispositifs de mesures d'objectifs optiques sont décrits par les documents US2021/088327 et WO2020/245511.

Un but de la présente invention est de remédier à au moins un des inconvénients précités.

Un autre but de l'invention est de proposer un outil pour la caractérisation géométrique d'objectifs optiques moins chronophage.

Un autre but de l'invention est de proposer un outil pour la caractérisation géométrique d'un objectif optique permettant une intervention sur ledit objectif optique en vue d'en améliorer sa performance, le cas échéant.

Un autre but de l'invention est de proposer un outil pour la caractérisation géométrique d'objectifs optiques permettant d'augmenter l'efficacité de fabrication des objectifs optiques.

### Exposé de l'invention

L'invention propose d'atteindre au moins un de ces objectifs par un procédé mis en oeuvre par ordinateur d'obtention d'un modèle de caractérisation géométrique d'un objectif optique cible à fabriquer par empilement de plusieurs éléments optiques selon la revendication 1.
- une phase de constitution d'une base, dite base d'entrainement, de jeux d'entrainement, chaque jeu d'entrainement comprenant pour un objectif optique, dit objectif d'entrainement, de même architecture que l'objectif optique cible :
   ▪un jeu de données, dit jeu d'assemblage d'entrainement, comprenant, pour chacun d'au moins deux des éléments optiques dudit objectif d'entrainement, un jeu de données, dit jeu individuel, comprenant au moins un paramètre caractéristique dudit élément optique, et
   ▪un jeu de données, dit jeu géométrique d'entrainement, comprenant des données relatives à au moins un paramètre géométrique chacune d'au moins deux des interfaces optiques de l'empilement d'éléments optiques de l'objectif optique d'entrainement ; et
- une phase d'entrainement d'un modèle de caractérisation géométrique avec ladite base d'entrainement avec les jeux d'assemblage d'entrainement comme entrée dudit modèle et les jeux géométriques d'entrainement comme sortie dudit modèle.

Ainsi, le modèle de caractérisation obtenu par le procédé selon l'invention permet de fournir, par estimation, au moins un paramètre géométrique relatif à l'objectif optique cible à fabriquer en fonction des caractéristiques d'au moins un, en particulier de chaque, élément optique composant ledit objectif optique cible à fabriquer. Autrement dit, avec le modèle de caractérisation géométrique obtenu par l'invention, il est possible d'obtenir un indicateur estimé concernant l'objectif optique cible avant de commencer sa fabrication. Cet indicateur estimé, fourni par le modèle de caractérisation géométrique selon l'invention, peut être utilisé pour estimer la qualité de l'objectif cible une fois fabriqué, par exemple par comparaison à un seuil, ou une fourchette de valeurs, pour déterminer si l'objectif optique cible, une fois fabriqué, serait performant ou non. Ainsi, il est possible d'avoir une indication sur la performance de l'objectif optique cible avant même de commencer sa fabrication, ou pendant sa fabrication.

Le procédé selon l'invention permet, par conséquent, d'augmenter l'efficacité de fabrication d'objectifs optiques, cette efficacité étant définie comme étant le nombre d'objectifs optiques satisfaisants divisé par le nombre total d'objectifs optiques fabriqués. Le procédé selon l'invention permet aussi de diminuer les pertes de temps et de coût liés à la production d'un objectif optique dont les performances ne seraient pas satisfaisantes.

De plus, la caractérisation d'un objectif optique cible à partir des paramètres des éléments optiques qui le composent est plus rapide et moins chronophage, comparée aux techniques actuelles de caractérisation, telles que des techniques de caractérisation par mesure de valeurs de MTF.

Surtout, comme le modèle de caractérisation géométrique permet de donner une indication sur la performance de l'objectif optique cible, avant de fabriquer ledit objectif optique cible, il est possible de modifier ou ajuster la composition de l'objectif optique cible pour améliorer sa performance, par exemple en remplaçant un élément optique ou en modifiant la position ou l'orientation d'un élément optique. Cela permet d'ajuster, ou de retoucher, l'architecture de l'objectif optique cible pour s'assurer que celui-ci sera performant une fois fabriqué.

Plus encore, le modèle de caractérisation géométrique obtenu par l'invention peut être utilisé pour identifier la corrélation entre au moins un paramètre d'au moins un élément optique formant l'objectif optique et l'indicateur de performance dudit objectif optique.

Les éléments optiques composant un objectif optique sont empilés suivant une direction d'empilement, également appelé axe Z dans la suite, ou encore l'axe de l'objectif optique. Le plan perpendiculaire à l'axe Z, c'est-à-dire le plan selon lequel chaque élément optique s'étend, est appelé le plan X-Y dans la suite.

Dans la présente demande, le modèle de caractérisation géométrique, également appelé modèle de caractérisation dans la suite, fournit, une fois entrainé, des données estimées relatives à la géométrie des interfaces optiques de l'objectif optique, également appelé « paramètre géométrique » de l'interface optique, dans la présente demande.

Par « paramètre géométrique d'une interface optique », on entend, par exemple, et sans perte de généralité :
- une position de l'interface optique au sein de l'objectif, dans l'axe Z ;
- une position d'un APEX de l'interface optique, en particulier dans le plan X-Y et/ou
- une position d'un APEX de l'interface optique, en particulier dans l'axe Z,
- une inclinaison (TIP et/ou TILT) de ladite interface optique par rapport à l'axe Z,
- un décentrement d'une interface optique, ou d'un élément optique, par rapport à l'axe Z, dans le plan X-Y.

Deux objectifs optiques ont une architecture identique lorsque chacun de ces objectifs optiques comprennent par conception des éléments optiques identiques empilés par conception de manière identique.

Dans la présente demande, par « interface optique enterrée » d'un objectif optique, on entend une interface au sein de l'objectif optique qui n'est visible, ou accessible, que par l'intermédiaire d'au moins une autre interface optique de l'objectif. L'au moins une autre interface optique au travers de laquelle l'interface enterrée est visible peut être une interface optique d'un même élément optique, ou une interface optique d'un autre élément optique que l'interface enterrée.

Le jeu géométrique d'entrainement peut comprendre des données relatives à au moins un paramètre géométrique d'au moins une interface optique enterrée de l'objectif optique d'entrainement.

Bien entendu, le jeu géométrique d'entrainement peut comprendre des données relatives à au moins un paramètre géométrique d'au moins une interface non enterrée de l'objectif optique.

Une fois entrainé, le modèle de caractérisation fournira, pour un objectif optique cible, un jeu géométrique estimé en fonction d'un jeu d'assemblage relatif audit objectif optique cible. Ce jeu géométrique estimé peut comprendre des données de même nature que celles contenues dans le jeu géométrique d'entrainement.

De manière générale, toutes les caractéristiques décrites dans la suite et se rapportant à la nature et au formalisme des données dans le jeu géométrique d'entrainement s'appliquent aussi au jeu de géométrique estimé, et *vice versa.*

De manière similaire, toutes les caractéristiques décrites dans la suite et se rapportant à la nature et au formalisme des données dans le jeu d'assemblage d'entrainement, respectivement dans le jeu individuel, s'appliquent aussi au jeu d'assemblage, et *vice versa.*

Suivant des modes de réalisation, au moins un jeu individuel, noté JI dans la suite, d'un élément optique peut comprendre une combinaison quelconque d'au moins un des paramètres suivants :
- au moins un paramètre optique dudit élément optique ;
- au moins un paramètre géométrique dudit élément optique ;
- au moins un paramètre de fabrication dudit élément optique.

Par exemple, au moins un paramètre optique d'un élément optique peut être un des paramètres optiques suivants :
- un indice de réfraction,
- un nombre d'Abbé,
- etc.

Par exemple, au moins un paramètre géométrique d'un élément optique peut être un des paramètres géométriques suivants :
- une forme géométrique d'une, en particulier de chaque, interface optique de l'élément optique,
- un centre de courbure d'une, en particulier de chaque, interface optique de l'élément optique,
- une position d'un apex d'une, en particulier de chaque, interface optique de l'élément optique,
- au moins une épaisseur dudit élément optique le long de la circonférence dudit élément optique,
- un diamètre intérieur, et/ou un diamètre extérieur, dudit élément optique
- une concentricité, ou une excentricité, des interfaces optiques de l'élément optique,
- une rugosité de surface d'au moins une, en particulier de chaque, interface de l'élément optique,
- etc.

Par exemple, au moins un paramètre fabrication d'un élément optique peut être au moins un des paramètres de fabrication suivants :
- une température de moulage,
- une pression de moulage,
- un temps de moulage,
- un polymère utilisé pour le moulage,
- etc.

Au moins un paramètre d'un élément optique peut être fourni par un fournisseur, ou un fabricant.

Un tel paramètre peut faire partie des spécifications de l'élément optique au moment de sa conception, ou mesuré pendant, ou après, la fabrication de l'élément optique.

Un tel paramètre peut être l'un quelconque des paramètres listés plus haut.

Alternativement, ou en plus, au moins un paramètre d'un élément optique peut être calculé à partir d'une modélisation numérique dudit élément.

En effet, il existe différents outils logiciels de simulation et de conception, tels que par exemple, « OSLO^{®} » ou « ZEMAX ^{®} », permettant de modéliser numériquement un élément optique pour déterminer au moins une caractéristique dudit élément optique, par simulation, à partir de sa modélisation numérique.

Un tel paramètre peut être l'une quelconque des paramètres listés plus haut.

Alternativement, ou en plus, au moins un paramètre d'un élément optique peut être mesuré par un dispositif de mesure.

Par exemple, chacun des paramètres géométriques peut être obtenu par un appareil de profilométrie optique ou un appareil de profilométrie mécanique. En effet, un tel appareil permet de détecter la forme de l'élément optique, l'épaisseur de l'élément optique, la position des APEX, la rugosité, etc.

Par exemple, chacun des paramètres géométriques peut être obtenu par un appareil d'interférométrie optique en mode point ou en mode plein champ.

De manière générale, un tel paramètre mesuré peut être l'un quelconque des paramètres listés plus haut.

Suivant des modes de réalisation, le jeu géométrique d'entrainement peut comprendre des données d'une partie, ou de la totalité, de valeurs brutes de mesure(s) optique(s) obtenues à partir de l'empilement d'éléments optiques dudit objectif optique d'entrainement.

Par exemple, le jeu géométrique d'entrainement peut comprendre des données de mesure(s) confocale(s), ou des données de mesure(s) d'interférométrie optique, exécutées sur l'empilement d'élément optique de l'objectif optique d'entrainement.

Le jeu géométrique d'entrainement peut en particulier comprendre des données de mesures optiques réalisées uniquement depuis une face, ou un côté, de l'empilement d'éléments optiques, sans avoir à retourner ledit empilement. Ainsi, le jeu géométrique d'entrainement comprend des données relatives à au moins une, et en particulier à chaque, interface optique de l'objectif optique d'entrainement, y compris chaque interface optique enterrée, de l'empilement d'éléments optiques.

Selon des modes de réalisation, le jeu géométrique d'entrainement peut comprendre des données d'au moins une mesure confocale réalisée sur l'empilement d'éléments optiques de l'objectif optique d'entrainement, préférentiellement depuis une face dudit empilement.

De manière classique, une mesure confocale est réalisée avec un appareil qui comprend une première ouverture (orifice) imagée sur la surface à mesurer par l'intermédiaire d'une lentille de focalisation. Cette ouverture est éclairée par un faisceau lumineux provenant d'une source de lumière et qui est ensuite dirigé vers la surface à mesurer. Lorsque le faisceau est réfléchi par une surface, il est redirigé vers la lentille de focalisation puis vers une seconde lentille placée devant un élément de détection et de façon à être l'image conjuguée du point illuminé sur la surface mesurée. L'avantage d'une telle configuration est la réduction de la profondeur de champ et donc de pouvoir distinguer plus facilement des objets (ou surfaces) les unes sous les autres. Pour réaliser la détection, le dispositif de mesure confocale est déplacé relativement par rapport à l'objet mesuré. Un maximum d'intensité est détecté sur l'élément de détection lorsqu'une surface entre dans le point de focalisation définie par la lentille de focalisation. Une configuration particulière d'un dispositif de mesure confocale utilise une lentille chromatique pour focaliser et imager un faisceau issu d'une source polychromatique. Les différentes longueurs d'ondes définissent ainsi différents points de focalisation le long de l'axe optique de la lentille. La détection avec un spectromètre de la lumière réfléchie permet de reconnaître la longueur d'onde réfléchie et en déduire une information de hauteur (ou distance) entre la lentille et la surface mesurée. Une telle configuration permet d'éliminer ou de réduire le déplacement du dispositif de mesure confocale. Notamment, lorsque le dispositif de mesure confocale est déplacé selon un plan perpendiculaire à l'axe d'illumination de la surface à mesurer, des informations de topographie d'une surface peuvent être obtenues.

Selon des modes de réalisation, le jeu géométrique d'entrainement peut comprendre des données de mesure(s) d'interférométrie optique réalisée(s) sur l'empilement d'éléments optiques d'un objectif optique d'entrainement, préférentiellement depuis une face dudit empilement.

De manière classique, une mesure d'interférométrie optique est réalisée avec un appareil d'interférométrie optique comprenant une source de lumière à faible cohérence. Cette source de lumière émet, en direction de l'empilement d'éléments optiques, et plus particulièrement selon l'axe Z, un faisceau de lumière, appelé faisceau de mesure. Le faisceau de mesure, illumine l'empilement d'éléments optiques en un point de mesure plus ou moins large selon la focalisation dans le plan X-Y, et parcourt alors l'empilement d'éléments optiques, en particulier dans la direction d'empilement, et traverse chaque interface optique à tour de rôle. À chaque interface optique, une partie du faisceau est réfléchie, et constitue un faisceau réfléchi. Ce faisceau réfléchi est alors détecté par un capteur, et est caractérisé par interférométrie optique avec un faisceau de référence provenant aussi de la source de lumière. Par « zone de cohérence », on entend la zone dans laquelle des interférences entre le faisceau de mesure et le faisceau de référence peuvent se former sur le capteur. La zone de cohérence peut être déplacée en variant la différence de la longueur du chemin optique entre les deux faisceaux, par exemple en modifiant la longueur optique d'un des faisceaux ou des deux. L'appareil d'interférométrie optique permet de détecter sélectivement un signal d'interférence pour chaque interface au niveau de laquelle la zone de cohérence est positionnée, c'est-à-dire pour chaque surface se trouvant dans la zone de cohérence. Préférentiellement, la longueur de cohérence de la source lumineuse est ajustée de sorte à être plus courte qu'une distance optique minimale entre deux interfaces adjacentes de l'élément optique. Ainsi, pour chaque mesure, une seule interface se trouve dans la zone de cohérence, et donc, un signal d'interférence acquis ne comprend que la contribution d'une seule interface, ou ne provient que d'une seule interface. Les mesures des interférences sont effectuées selon un champ de vue déterminé par les moyens de mesure de l'appareil d'interférométrique.

Selon un mode de réalisation, l'appareil interférométrique peut opérer en mode point en étant configuré pour détecter un signal d'interférence ponctuel en un point du champ de vue ou en un détecteur ponctuel. Le jeu géométrique peut être, ou peut comprendre, le signal d'interférence ou l'interférogramme qui est un signal d'intensité fonction du déplacement de la zone de cohérence le long de l'axe z. Le signal d'interférence peut, par exemple, être vu comme une succession de raies d'interférence associées à chaque interface optique.

Alternativement ou en plus, l'appareil interférométrique peut comprendre un capteur interférométrique, dit capteur interférométrique en plein champ, configuré pour détecter un signal d'interférence en plein champ dans un champ de vue et représenté, par exemple, sous la forme d'une image 2D (image d'interférence) grâce à l'élément de détection.

Une interface à mesurer peut ainsi être imagée selon le champ de vue en une seule mesure ou par balayage d'un faisceau.

Dans un exemple particulier de mise en œuvre, un signal de mesure peut être formé par un signal d'interférence ponctuel associé à un pixel de l'élément de détection dont l'intensité est détectée suivant le déplacement en Z de la zone de cohérence.

Selon des modes de réalisation, l'appareil interférométrique peut comprendre un capteur interférométrique avec un interféromètre de Michelson. Selon un autre exemple, l'appareil interférométrique peut comprendre un capteur interférométrique avec un interféromètre de Mach-Zehnder.

Selon des modes de réalisation, un appareil interférométrique en mode point et un appareil interférométrique en plein champ peuvent être associés.

Suivant des modes de réalisation, et comme indiqué plus haut, le jeu géométrique d'entrainement peut comprendre des données d'une partie ou de la totalité de valeurs brutes d'interférométrie optique obtenues à partir de l'empilement d'éléments optiques dudit objectif optique d'entrainement.

Autrement dit, dans ce cas, le modèle de caractérisation géométrique prend en entrée un jeu d'assemblage et fournit en sortie un jeu géométrique comprenant des données de mesures brutes d'interférométrie optique.

Les données de mesure brutes d'interférométrie optique peuvent comprendre, pour chaque interface optique :
- **en mode point** : au moins une raie d'interférence dont la position et l'amplitude dépendent de la distance géométrique à laquelle se trouve ladite interface optique, par rapport à un point/plan de référence, au point de mesure. En particulier, le point/plan de référence est le point/plan d'émission de l'onde de mesure, ou alors d'une interface de référence connue faisant partie du dispositif de mesure. Ainsi, la position d'une raie d'interférence permet de déterminer la distance à laquelle se trouve l'interface optique qui lui est associée, au point de mesure.
- **en mode plein champ** : une séquence de signaux d'interférence 2D acquis pour une pluralité de différences de trajets optiques permettant d'obtenir des informations de forme des interfaces optiques. Ces séquences peuvent être acquises de différentes manières selon la technique d'analyse mise en œuvre. La pluralité de signaux d'interférence 2D peut notamment être acquise selon une méthode interférométrique par décalage de phase ou selon une méthode interférométrique par balayage vertical. Selon un autre mode de réalisation nullement limitatif, le signal d'interférence peut être traité par un procédé de calcul par holographie numérique. Typiquement, les signaux d'interférence 2D comportent une information d'amplitude et une information de phase. Des images associées à ces informations d'amplitude et des images associées à ces informations de phase peuvent être construites à partir des signaux d'interférence.

Par exemple, le jeu géométrique d'entrainement peut comprendre le signal d'interférence.

Par exemple, le jeu géométrique d'entrainement peut comprendre des données représentant, pour au moins une raie d'interférence, la position, et éventuellement l'amplitude de ladite raie d'interférence.

Selon un autre exemple, le jeu géométrique d'entrainement peut comprendre des données représentant l'image d'amplitude et/ou l'image de phase associées à une image d'interférence.

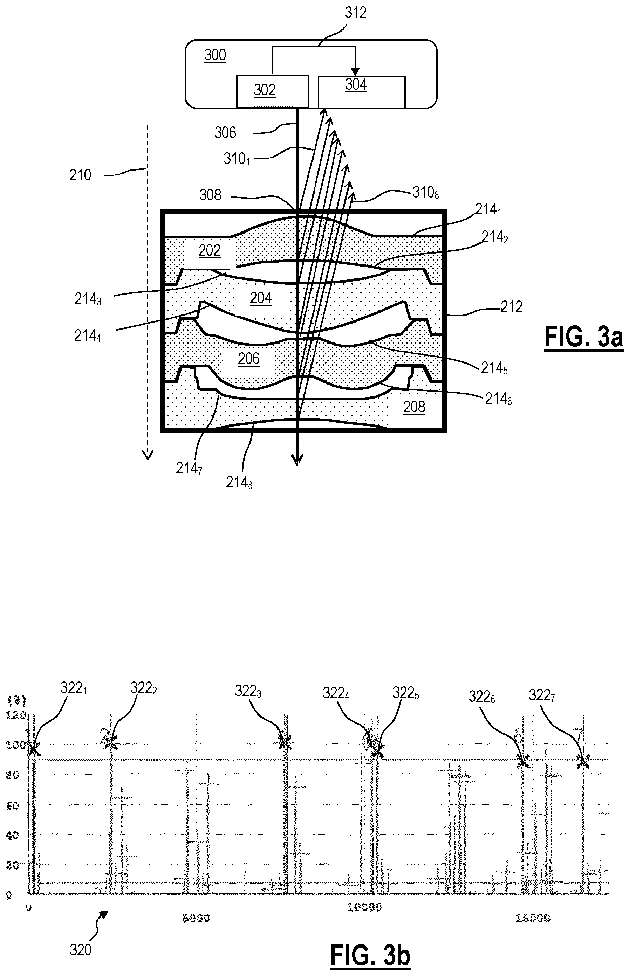

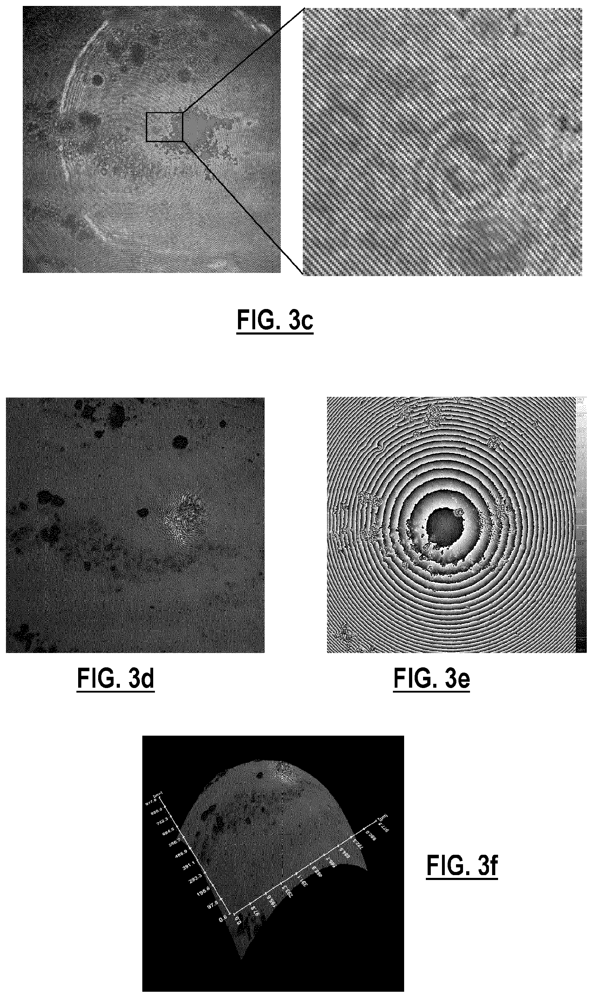

Un exemple de données brutes est donné plus loin en référence à la FIGURE 3b pour un exemple d'interférométrie en mode point et à en référence aux FIGURES 3c-3f pour un exemple d'interférométrie en mode plein champ.

Suivant des modes de réalisation, le jeu géométrique d'entrainement peut comprendre une valeur d'au moins un paramètre géométrique d'une interface optique de l'objectif d'entrainement.

Par exemple, le jeu géométrique d'entrainement peut comprendre, pour au moins une interface optique, ou un élément optique, de l'empilement d'éléments optiques de l'objectif optique d'entrainement :
- au moins une valeur de position d'une interface, ou d'un élément, optique de l'objectif optique d'entrainement ;
- au moins une valeur d'épaisseur d'un élément optique de l'objectif optique d'entrainement ;
- au moins une valeur de décentrement d'au moins une interface, ou d'un élément, optique par rapport à l'axe Z, ou relativement à une position de centre d'une autre interface, dans le plan X-Y ; ou
- au moins une valeur d'inclinaison d'au moins une interface, ou d'un élément, optique par rapport à l'axe Z, ou relativement à l'inclinaison une autre interface.
- au moins une valeur de topographie ou de profil de forme d'au moins une interface, par exemple par rapport à un plan ou un axe de référence pour en déduire, par exemple, des valeurs de décentrement ou d'inclinaison.

La position selon l'axe Z d'une interface optique peut être déterminée comme étant la position d'une raie d'interférence correspondant à ladite interface.

L'épaisseur d'un élément optique, selon l'axe Z, peut être déterminée en calculant la distance entre les raies d'interférence correspondant à chacune des interfaces optiques dudit élément optique.

La position d'une interface optique par rapport à l'axe Z peut être déterminée en effectuant plusieurs mesures d'interférométrie optique, en particulier dans une zone centrale de l'objectif optique. En suivant, sur les plusieurs mesures, la position, selon l'axe Z, de la raie d'interférence associée à ladite interface, il est possible de déterminer la position de l'APEX de ladite interface optique. La position de l'APEX de l'interface optique permet de déterminer la position de ladite interface par rapport à l'axe Z, dans le plan X-Y, et donc son décentrement par rapport à l'axe Z.

Dans un autre exemple, la position d'une interface par rapport à l'axe Z peut être obtenue, par exemple, par détection d'une image d'interférence de l'interface dans une zone centrale de l'objectif optique et analyse de cette image et/ou analyse des images d'amplitudes ou de phases associées, notamment pour obtenir un profil de cette surface et la position de l'APEX de ladite interface optique.

La position d'un élément optique par rapport à l'axe Z peut être déterminée en fonction des positions de ces interfaces optiques.

L'inclinaison d'une interface optique par rapport à l'axe Z peut être déterminée en effectuant plusieurs mesures d'interférométrie optique, en particulier dans une zone périphérique de l'objectif optique. En suivant, sur les plusieurs mesures, la position dans l'axe Z, de la raie d'interférence associée à ladite interface, il est possible de déterminer la position de l'interface selon l'axe au niveau de ses bords, ce qui permet de déterminer l'inclinaison de ladite interface par rapport à l'axe Z.

L'inclinaison d'un élément optique par rapport à l'axe Z peut être déterminée en fonction des inclinaisons de ses interfaces optiques.

Il est également possible de déterminer chacun de ces paramètres géométriques en utilisant l'amplitude d'une raie d'interférence, en plus ou à la place de la position de la raie d'interférence.

Suivant des modes de réalisation, pour au moins un jeu d'entrainement, le jeu géométrique d'entrainement peut être obtenu, en partie ou en totalité, par simulation à partir d'une modalisation numérique d'un objectif optique d'entrainement.

Par exemple, durant la phase de conception d'un objectif optique, son architecture peut être modélisée en représentant les interfaces optiques (particulièrement celles des lentilles) par des formulations analytiques et en indiquant numériquement leurs espacements. Les valeurs théoriques d'indice de réfraction et de nombre d'Abbé des matériaux impliqués peuvent aussi être données. Ces valeurs théoriques peuvent ensuite être entrées dans des logiciels de conception optique, disponibles commercialement, pour simuler et optimiser les paramètres définissant l'objectif optique en calculant les performances fonctionnelles théoriques. Il est ainsi possible de calculer assez parfaitement les propriétés de transfert optique par simulation de la propagation de rayons optiques, cela pour différents points de la scène à observer, et les différents points associés sur la zone de détection.

Ainsi, le jeu géométrique d'entrainement peut être obtenu par simulation à partir d'une représentation numérique de l'objectif d'entrainement. La base d'entrainement peut donc être constituée, en partie ou en totalité, par simulation ce qui est plus rapide, et implique moins d'effort et de ressources.

Suivant des modes de réalisation, pour au moins un jeu d'entrainement, le jeu géométrique d'entrainement peut être obtenu, en partie ou en totalité, par mesure avec un appareil de mesure, sur un objectif d'entrainement réel.

Dans ce cas, ledit jeu géométrique d'entrainement peut être mesuré par au moins une mesure confocale, et/ou au moins une mesure interférométrique, tel que décrit plus haut, pour fournir soit des données brutes relatives à, soit des valeurs de, au moins un paramètre géométrique d'au moins une interface optique de l'empilement optique de l'objectif optique d'entrainement.

Suivant des modes de réalisation particulièrement avantageux, au moins un jeu d'entrainement peut être obtenu à partir d'un objectif optique d'entrainement faisant partie d'un même lot d'objectifs optiques que l'objectif optique cible, lors de la fabrication dudit lot d'objectifs optiques.

Autrement dit, dans ce cas, la base d'entrainement est obtenue, en partie ou en totalité, à partir d'objectifs optiques faisant partie du même lot que l'objectif optique cible et qui ont été fabriqués préalablement. Ainsi, le modèle de caractérisation est plus précis et permet de réaliser une caractérisation géométrique plus précise de l'objectif optique puisqu'il a été entrainé sur des objectifs optiques très proches les uns des autres.

Par « objectifs de même lot », on entend des objectifs qui proviennent d'une même architecture (même « design ») conçue pour que les objectifs réalisent une performance optique similaire. De plus, ces objectifs peuvent aussi avoir des caractéristiques de fabrication communes telles que provenir d'une même ligne de production, être produits avec une machine commune, à des périodes semblables, etc...

Dans ce cas, une première partie des objectifs optiques fabriqués d'un même lot est utilisée pour constituer une base d'entrainement. En particulier, pour chaque objectif optique de cette première partie du lot, il est constitué un jeu d'entrainement comprenant :
- un jeu d'assemblage d'entrainement : ce dernier comprenant au moins un paramètre d'au moins un, en particulier de chaque, élément optique qui est soit mesuré, soit renseigné par un fournisseur, ou encore obtenu par simulation ; et
- au moins un jeu géométrique d'entrainement : ce dernier comprenant au moins une donnée relative à au moins un paramètre géométrique d'au moins une, en particulier de chaque, interface optique de l'empilement, qui est soit mesurée, par exemple par une mesure confocale ou par une mesure d'interférométrie optique, soit obtenue par simulation à partir d'une modélisation numérique de l'objectif optique.

Ainsi, les premiers objectifs optiques fabriqués du lot permettent de constituer une base d'entrainement. Cette base d'entrainement est utilisée pour entrainer le modèle de caractérisation géométrique. Une fois le modèle de caractérisation géométrique entrainé, il est utilisé pour caractériser les objectifs optiques suivants dudit lot à partir d'un jeu d'assemblage de chaque objectif optique.

Suivant des modes de réalisation, le modèle de caractérisation géométrique peut comprendre :
- un réseau de neurones, en particulier régressif, et encore plus particulièrement un réseau de neurones CNN (pour « Convolutional Neural Network » en anglais ou « Réseau de Neurones à Convolution » en français) à apprentissage profond ;
- un modèle de régression linéaire de polynômes ;
- une équation gaussienne, obtenue par une méthode des moindres carrés ; ou
- une méthode d'analyse statistique.

Lorsque le modèle de caractérisation géométrique est un réseau de neurones, en particulier un CNN, la phase d'entrainement peut comprendre une étape d'entrainement qui est réitérée plusieurs fois.

L'étape d'entrainement peut comprendre une étape de test. Cette étape de test peut comprendre une étape lors de laquelle un jeu d'assemblage d'entrainement, par exemple JAA₁, d'un jeu d'entrainement, par exemple JE₁, est donné en entrée du réseau de neurones. Le réseau de neurones donne en sortie un jeu géométrique d'entrainement estimé, noté JGA₁^{e}.

Lors d'une étape suivante de l'étape de test, une erreur, E₁, peut être calculée entre le jeu JGAᵢ^{e} et le jeu de géométrique d'entrainement, JGA₁, dudit jeu d'entrainement JE₁. L'erreur calculée E₁ peut par exemple être une distance euclidienne ou une distance cosinus entre le jeu JGA₁^{e} et le jeu JGA₁.

L'étape de test peut être réitérée pour chaque jeu d'entrainement JE₁-JEₖ, de sorte à obtenir k valeurs d'erreur E₁-Eₖ associées respectivement à chaque jeu d'entrainement JE₁-JEₖ.

L'étape d'entrainement peut ensuite comprendre une étape de calcul d'une erreur globale, notée EG, pour l'ensemble des jeux d'entrainement, JE₁-JEₖ, par exemple en additionnant les k erreurs JE₁-JEₖ obtenues.

L'étape d'entrainement peut ensuite comprendre une étape de rétroaction, lors de laquelle les coefficients, ou poids, du réseau de neurones CNN peuvent être mis à jour, par exemple par un algorithme de rétropropagation du gradient de l'erreur.

L'étape d'entrainement peut être répétée plusieurs fois jusqu'à ce que l'erreur globale EG ne varie plus pendant plusieurs, par exemple 5, itérations successives de l'étape d'entrainement. Lorsque c'est le cas, le réseau de neurones CNN peut être considéré suffisamment entrainé et la phase d'entrainement peut être terminée.

Alternativement, ou en plus de ce qui vient d'être décrit, il est possible d'utiliser une première partie de la base d'entrainement, par exemple JE₁-JEⱼ, pour l'entrainement du réseau de neurones et une deuxième partie de la base d'entrainement, par exemple JEⱼ₊₁-JEₖ, pour valider l'entrainement du réseau de neurones. Si les sorties du réseau de neurones obtenues sont assez proches des valeurs attendues, l'apprentissage peut être considéré comme acceptable. Sinon, plus de jeux d'entrainements peuvent être présentés, ou bien la topologie du réseau de neurones peut être modifiée (nombre de couches, nombre de neurones par couches, etc.) jusqu'à obtention d'un apprentissage satisfaisant.

Bien entendu, le modèle de caractérisation géométrique n'est pas limité à un réseau de neurones.

Suivant une alternative, le modèle de caractérisation géométrique peut comprendre, ou peut être, une méthode de recherche de corrélations, par exemple par méthode de régression, entre le jeu d'assemblage d'entrainement JAAᵢ et le jeu géométrique d'entrainement JGAᵢ de chaque jeu d'entrainement JEᵢ.

Suivant un exemple de réalisation, la recherche des corrélations peut se faire via une méthode des moindres carrés. Elle peut consister à la mise en place d'une relation polynomiale supposée entre les jeux JAAᵢ et JGAᵢ, et cela pour chaque JEᵢ. Ensuite, la méthode des moindres carrés permet de trouver le meilleur jeu de coefficients des polynômes qui minimise l'erreur entre les sorties calculées par les polynômes obtenus et les JGAᵢ.

Suivant un autre aspect de la présente invention, il est proposé un module informatique, selon la revendication 10, configuré pour exécuter un modèle de caractérisation géométrique obtenu par le procédé selon l'une quelconque des revendications précédentes.

Un tel modèle peut être un réseau neuronal entrainé, au moins une relation polynomiale, etc.

Un tel modèle peut être un programme d'ordinateur en tout langage informatique, tel que par exemple en langage machine, en C, C++, JAVA, etc.

Un tel modèle peut être mémorisé sur un support informatique, tel qu'une mémoire flash, une puce informatique, un calculateur, un processeur, un disque dur, un ordinateur, un serveur, etc.

Suivant la revendication 11, il est proposé un dispositif d'obtention d'un outil de caractérisation géométrique d'un objectif optique cible à fabriquer par empilement de plusieurs éléments optiques, ledit dispositif comprenant :
- des moyens de constitution d'une base, dite base d'entrainement, de jeux d'entrainement, chaque jeu d'entrainement comprenant pour un objectif optique, dit objectif d'entrainement, de même architecture que l'objectif cible :
   ▪ un jeu de données, dit jeu d'assemblage d'entrainement, comprenant, pour chacun d'au moins deux des éléments optiques dudit objectif d'entrainement, un jeu de données, dit jeu individuel, comprenant au moins un paramètre caractéristique dudit élément optique, et
   ▪un jeu de données, dit jeu géométrique d'entrainement, comprenant des données relatives à au moins un paramètre géométrique pour chacune d'au moins deux des interfaces optiques de l'empilement d'éléments optiques de l'objectif optique d'entrainement ; et
- une unité informatique d'entrainement d'un modèle de caractérisation géométrique avec ladite base d'entrainement avec les jeux d'assemblage d'entrainement comme entrée dudit modèle et les jeux géométriques d'entrainement comme sortie dudit modèle.

L'unité informatique peut comprendre un calculateur, un processeur, un ordinateur, un serveur, etc.

Les moyens de constitution de la base d'entrainement peuvent comprendre :
- au moins un moyen de mesure, réelle ou par simulation, d'au moins un jeu d'assemblage d'entrainement, ou encore une interface de saisie d'au moins un jeu d'assemblage, et
- au moins un moyen de mesure, réelle ou par simulation, d'au moins un jeu géométrique d'entrainement.

De manière générale, le dispositif selon l'invention d'obtention d'un outil de caractérisation géométrique peut comprendre, en termes de moyens, une combinaison quelconque d'au moins une des caractéristiques décrites plus haut en référence au procédé selon l'invention d'obtention d'un outil de caractérisation géométrique, et qui ne sont pas reprises ici par soucis de concision.

Suivant la revendication 12, il est proposé un procédé de caractérisation géométrique d'un objectif optique cible à fabriquer comprenant un empilement de plusieurs éléments optiques, ledit procédé comprenant les étapes suivantes :
- obtention d'un jeu de données, dit jeu d'assemblage, comprenant, pour chacun d'au moins deux des éléments optiques dudit objectif cible, un jeu de données, dit jeu individuel, comprenant au moins un paramètre caractéristique dudit élément optique ; et
- fourniture, par le modèle de caractérisation géométrique, obtenu par le procédé selon l'une quelconque des revendications 1 à 9, prenant en entrée ledit jeu d'assemblage, d'un jeu de données, dit jeu géométrique estimé, comprenant des données relatives à au moins un paramètre géométrique pour chacune d'au moins deux des interfaces optiques de l'empilement d'éléments optiques de l'objectif optique cible.

L'au moins un jeu d'assemblage peut être obtenu de manière similaire au jeu d'assemblage d'entrainement. L'au moins un jeu d'assemblage peut comprendre des données de même nature que celles du jeu d'assemblage d'entrainement. De manière générale, toutes les caractéristiques décrites plus haut en référence au jeu d'assemblage d'entrainement peuvent être appliquées au jeu d'assemblage.

L'au moins un jeu géométrique estimé peut comprendre des données de même nature que celles du jeu géométrique d'entrainement. De manière générale, toutes les caractéristiques décrites plus haut en référence à la nature et au formalisme des données du jeu géométrique d'entrainement peuvent être appliquées au jeu géométrique estimé.

Suivant la revendication 13, il est proposé un dispositif de caractérisation géométrique d'un objectif optique cible à fabriquer comprenant un empilement de plusieurs éléments optiques, ledit dispositif comprenant :
- des moyens d'obtention d'un jeu de données, dit jeu d'assemblage, comprenant, pour chacun d'au moins deux des éléments optiques dudit objectif cible, un jeu de données, dit jeu individuel, comprenant au moins un paramètre caractéristique dudit élément optique ; et
- le module informatique selon la revendication 10, prenant en entrée ledit jeu d'assemblage, pour fournir un jeu de données, dit jeu géométrique estimé, comprenant des données relatives à au moins un paramètre géométrique pour chacune d'au moins deux des interfaces optiques de l'empilement d'éléments optiques de l'objectif optique cible.

Le module informatique peut être un processeur, une puce, un ordinateur, une tablette, un serveur, etc. dédié ou non.

Suivant des modes de réalisation, le modèle de caractérisation géométrique peut être intégré dans un appareil existant réalisant au moins une autre fonction, ou dans un appareil indépendant et dédié.

Suivant un autre aspect de la présente invention, il est proposé un procédé de fabrication d'un lot d'objectifs optiques comportant une deuxième phase de fabrication comprenant au moins une itération d'une étape de fabrication d'un objectif optique dudit lot comprenant les opérations suivantes :
- détermination d'un jeu d'assemblage pour ledit objectif optique, à partir de jeux individuels pour chacun des éléments optiques dudit objectif optique, et
- caractérisation dudit objectif par le procédé de caractérisation selon l'invention.

Au moins une, et en particulier chaque, valeur du jeu géométrique estimé obtenu peut être comparée à au moins une valeur géométrique, ou à une fourchette de valeurs géométriques, pour déterminer si la qualité estimée de l'objectif optique est satisfaisante.

Si la qualité estimée de l'objectif optique est satisfaisante, alors l'objectif optique peut être fabriqué.

Si la qualité estimée de l'objectif optique n'est pas satisfaisante, alors l'objectif optique peut être soumis à au moins un autre test, ou ne pas être fabriqué.

Alternativement ou en plus, si la qualité estimée de l'objectif optique n'est pas satisfaisante, alors l'objectif optique peut être retouché pour améliorer sa qualité estimée. Par exemple, au moins un élément optique de l'objectif optique peut être repositionné (par exemple être pivoté suivant un axe de rotation), ou remplacé par un autre élément optique.

Ainsi, il est possible de valider ou non un assemblage d'éléments optiques formant un objectif avant même de réaliser ledit assemblage optique, voire avant même de commencer à fabriquer ledit objectif optique. Cela permet d'augmenter l'efficacité des développements des procédés de fabrication, grâce aux informations sur les composants optiques et de la production d'objectifs optiques mettant ces procédés en œuvre grâce aux données de prédictions obtenues bien avant la finalisation complète de l'objectif, permettant ainsi, entre autres, de diminuer les pertes à la fois des composants optiques qui peuvent être dirigés vers des assemblages favorables et des objectifs.

La variation d'au moins une donnée du jeu géométrique, ou encore la qualité estimée déduite à partir du jeu géométrique estimé, peut être suivie dans le temps. Cette variation peut être utilisée pour réaliser un suivi de la fabrication des objectifs d'un même lot. Par exemple, lorsque la variation témoigne d'une déviation, ou d'une diminution, trop importante de la qualité fonctionnelle des objectifs optiques du lot, une alarme peut être générée de sorte que le procédé de fabrication peut être réajusté.

Avantageusement, le procédé de fabrication selon l'invention peut comprendre une première phase de fabrication, préalable à la deuxième phase de fabrication, comprenant au moins une itération d'une étape de fabrication d'un objectif optique dudit lot comprenant les opérations suivantes :
- détermination d'un jeu d'assemblage pour ledit objectif optique, à partir de jeux individuels des éléments optiques dudit objectif optique, et
- empilement des éléments optiques formant ledit objectif optique,
- mesure d'un jeu géométrique sur ledit objectif optique,
- mémorisation, dans une base d'entrainement, d'un jeu d'entrainement formé par :
   ▪ledit jeu d'assemblage, et
   ▪ledit jeu géométrique mesuré.

Cette première phase de fabrication permet de constituer une base d'entrainement pour entrainer le modèle de caractérisation géométrique utilisé lors de la deuxième phase de fabrication.

L'objectif optique peut être un objectif optique d'un Smartphone et en particulier un objectif optique d'un module caméra d'un Smartphone.

Alternativement, l'objectif optique peut être un objectif optique d'une tablette et en particulier un objectif optique d'un module caméra d'une tablette.

Alternativement, l'objectif optique peut être un objectif optique d'une caméra, et en particulier d'une caméra installée dans un véhicule, et en particulier d'un véhicule autonome.

Le véhicule peut être tout type de véhicule, et en particulier un véhicule terrestre, tel qu'une voiture, autonome ou non.

Le véhicule peut être tout type de véhicule, et en particulier un véhicule volant, tel qu'un avion, un hélicoptère, un drone, etc. autonome ou non.

Alternativement, l'objectif optique peut être un objectif optique d'un appareil d'imagerie médicale.

L'appareil d'imagerie médicale peut être un appareil d'imagerie médicale prévu pour être introduit, au moins une partie, dans le corps d'un sujet.

Suivant des exemples de réalisation non limitatif, l'appareil d'imagerie médicale peut être un endoscope, et encore plus particulièrement d'un endoscope jetable.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple de réalisation non limitatif d'un élément optique pouvant être utilisé pour fabriquer un objectif optique ;
- la FIGURE 2 est une représentation schématique d'un exemple de réalisation non limitatif d'un objectif optique au sens de la présente invention ;
- les FIGURES 3a à 3f sont des représentations schématiques d'un exemple non limitatif d'interférométrie optique pouvant être mise en œuvre dans la présente invention ;
- la FIGURE 4 est une représentation schématique d'un exemple de réalisation non limitatif d'un procédé selon l'invention d'obtention d'un outil de caractérisation géométrique d'un objectif optique ;
- la FIGURE 5 est une représentation schématique d'un exemple de réalisation non limitatif d'un dispositif selon l'invention d'obtention d'un outil de caractérisation géométrique d'un objectif optique ;
- la FIGURE 6 est une représentation schématique d'un exemple de réalisation non limitatif d'un procédé selon l'invention de caractérisation géométrique d'un objectif optique ;
- la FIGURE 7 est une représentation schématique d'un exemple de réalisation non limitatif d'un dispositif selon l'invention de caractérisation géométrique d'un objectif optique ; et
- la FIGURE 8 est une représentation schématique d'un exemple de réalisation non limitatif d'un procédé selon l'invention de fabrication d'un objectif optique.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

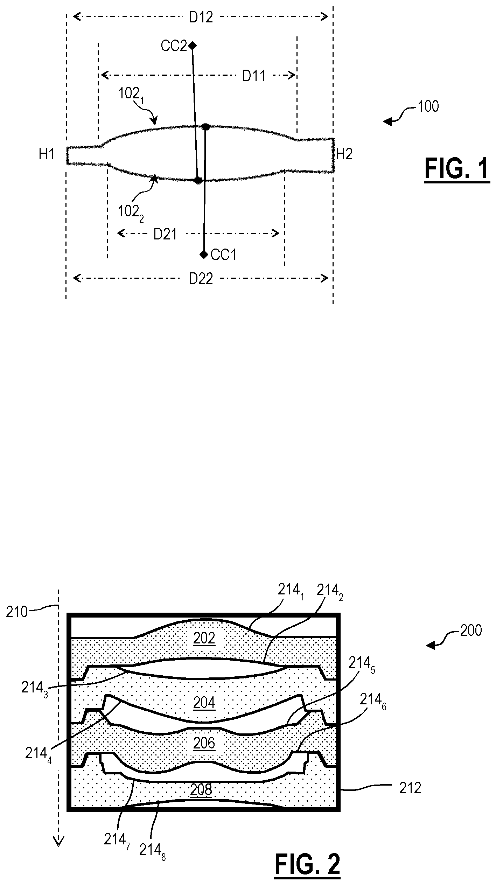

La FIGURE 1 est une représentation schématique d'un exemple de réalisation non limitatif d'un élément optique pouvant être utilisé pour fabriquer un objectif optique.

L'élément optique 100 de la FIGURE 1 peut être utilisé avec au moins un autre élément optique pour fabriquer un objectif optique. Un exemple d'objectif optique, donné à titre d'exemple non limitatif, sera décrit en référence à la FIGURE 2.

L'élément optique 100 peut être une lentille, une lame, etc. Dans la suite, et sans perte de généralité, on considère que l'élément optique est une lentille.

La lentille optique 100 peut par exemple être fabriquée par moulage par injection. Un procédé par moulage par injection suit de façon générale la succession d'étapes suivantes :
- injection du polymère et remplissage du moule,
- mise sous pression,
- maintien de la pression,
- refroidissement, et
- démoulage
Les procédés de fabrication de lentille par injection, bien que courants, peuvent fluctuer et générer des erreurs sur les paramètres caractéristiques des lentilles.

La lentille 100 peut être caractérisée par un jeu de paramètres, appelé jeu individuel JI.

Le jeu individuel JI peut comprendre au moins un paramètre relatif au processus de fabrication de la lentille, appelé paramètre de fabrication. Le jeu individuel peut comprendre une combinaison quelconque d'au moins un des paramètres de fabrication suivants :
- une température de moulage, notée TM ;
- une pression de moulage, notée PM ;
- une durée de moulage, notée DM ;
- un polymère utilisé pour le moulage, notée POM ;

Les valeurs de ces paramètres sont généralement déterminées par le fabricant de la lentille. Elles peuvent être soient connues en tant que donnée d'entrée du processus de fabrication, ou mesuré au cours de la fabrication de la lentille.

Par ailleurs, la lentille 100 a une forme géométrique donnée. Elle comporte deux interfaces 102₁ et 102₂, ayant elles aussi, chacune, une forme géométrique donnée. Ainsi, la lentille 100 a une forme qui est caractérisée par au moins un paramètre géométrique relatif à la forme de la lentille. Le jeu individuel JI peut comprendre, alternativement ou en plus, une combinaison quelconque d'au moins un des paramètres géométriques suivants :
- une forme géométrique de chacune des interfaces optiques 102₁ et 102₂ ;
- un centre de courbure, notées CC1 et CC2, de chacune des interfaces optiques 102₁ et 102₂ ;
- une position d'un apex, notées A1 et A2, de chacune des interfaces optiques 102₁ et 102₂ ;
- au moins une épaisseur, noté H1 et H2, de la lentille 100 le long de sa périphérie ;
- un diamètre intérieur, respectivement D11 et D21, et/ou un diamètre extérieur, respectivement D12 et D22, de chacune des interfaces 102₁ et 102₂ ;
- une concentricité ou valeur d'excentricité des interfaces 102₁ et 102₂
- une rugosité de surface de chacune des interfaces optiques 102₁ et 102₂ ;
- etc.

La valeur d'au moins un paramètre géométrique peut être fournie par le fabricant. Alternativement, ou en plus, la valeur d'au moins un paramètre géométrique peut être mesurée par exemple par profilométrie optique ou mécanique. Alternativement, ou en plus, la valeur d'au moins un paramètre géométrique peut être déterminée par simulation, à partir d'une modélisation numérique de la lentille 100. Alternativement, ou en plus, la valeur d'au moins un paramètre géométrique peut être mesurée par mesure(s) optique(s), tel que par exemple par mesure(s) confocale(s) ou par interférométrie optique.

De plus, la lentille 100 à des caractéristiques optiques puisqu'il s'agit d'un élément optique. Elle est donc caractérisée par au moins un paramètre optique. Ainsi, le jeu individuel JI peut comprendre, alternativement ou en plus, au moins un des paramètres optiques suivants :
- un indice de réfraction, notés I1 et I2, de chacune des interfaces optiques 102₁ et 102₂ ;
- un nombre d'Abbé, noté Ab,
- etc.

La valeur d'au moins un paramètre optique peut être fournie par le fabricant. Alternativement, ou en plus, la valeur d'au moins un paramètre optique peut être déterminée par mesure optique par exemple.

Ainsi, suivant un exemple de réalisation non limitatif, un jeu individuel JI d'une lentille peut s'écrire :
JI = {TM,PM,DM,PO; CC1,CC2,A1,A2,H1,H2,D11,D12,D21,D22; I1,I2,Ab}

Bien entendu, le jeu individuel peut comprendre d'autres paramètres que ceux décrits plus haut, ou ne pas comprendre certains des paramètres décrits plus haut. De manière générale, le jeu individuel peut comprendre M1 paramètres avec M1≥1 et préférentiellement M1≥2.

Le jeu individuel d'un élément optique d'un objectif optique peut être utilisé, avec le jeu individuel d'au moins un autre élément optique dudit objectif optique pour former un jeu, dit jeu d'assemblage, noté JA, associé audit objectif optique. Si l'objectif optique comprend N éléments optiques, alors le jeu d'assemblage JA peut comprendre, t comprend préférentiellement, N jeux individuels JI₁-JI_{N}, chaque jeu individuel JIᵢ comprenant un ou plusieurs paramètres. En considérant, sans perte de généralité, que chaque jeu individuel comprend M1 paramètres, alors le jeu d'assemblage comprend N x M1 paramètres et peut correspondre à une matrice comportant N lignes et M1 colonnes.

Bien entendu, les jeux individuels JI d'au moins deux éléments optiques peuvent comprendre un même nombre de paramètres, ou des nombres différents de paramètres.

La FIGURE 2 est une représentation schématique d'un exemple de réalisation non limitatif d'un objectif optique au sens de la présente invention.

Un objectif optique a pour fonction de focaliser une image d'une scène dans un plan image, généralement constitué par une caméra CMOS (dite « CMOS Imager System» qui fournit l'acronyme CIS). Un tel objectif optique est généralement constitué d'en empilement d'éléments optiques comprenant une combinaison quelconque d'éléments optiques tels que des lentilles, des rondelles d'espacement et d'opacification, etc.

Lors de la fabrication de l'objectif optique, chaque élément optique dudit objectif est sélectionné individuellement et empilé avec les autres éléments optiques dans un barillet d'assemblage, selon un ordre donné. L'empilement est ensuite solidarisé avec le barillet par des techniques connues, par exemple par collage.

Sur la FIGURE 2, et à titre d'exemple non limitatif seulement, l'objectif optique 200 comprend quatre lentilles 202-208 empilées, dans une direction d'empilement 210, également appelé axe Z, dans un barillet 212. Au moins deux des lentilles 202-208 peuvent être séparées entre elles d'un espace vide, appelé « air gap », ou d'une entretoise ou rondelle, d'espacement, également appelée « spacer ».

Au moins une des lentilles 202-208 peut par exemple être la lentille 100 de la FIGURE 1.

Chacune des lentilles 202-208 comporte deux interfaces, à savoir une interface, dite amont, et une interface, dite avale, dans la direction de l'empilement 210. Ainsi, la lentille 202 a une interface amont 214₁ et une interface avale 214₂, la lentille 204 a une interface amont 214₃ et une interface avale 214₄, la lentille 206 a une interface amont 214₅ et une interface avale 214₆ et la lentille 208 a une interface amont 214₇ et une interface avale 214₈.

Ainsi, pour l'objectif optique 200 de la FIGURE 2, le jeu d'assemblage JA peut comprendre un jeu individuel, noté respectivement JI₁-JI₄, pour chacun des éléments optiques 202-208, de sorte que : $JA = \left\{{JI}_{1} {; JI}_{2} {; JI}_{3} {; JI}_{4}\right\}$ Chaque jeu individuel JI₁-JI₄ peut comprendre une partie ou la totalité des paramètres donnés en exemple en référence à la FIGURE 1.

En outre, pour l'objectif optique 200, et de manière générale pour tout objectif optique comprenant un empilement d'éléments optiques, il est possible de déterminer un jeu de données, appelé jeu géométrique, notée JG dans la suite, comprenant des données relatives à au moins un paramètre géométrique d'au moins une, et en particulier de chaque, interface optique 214₁-214₈ dudit empilement.

Un tel jeu géométrique JG peut comprendre des données relatives à l'un quelconque des paramètres géométriques suivants :
- au moins une valeur de position d'au moins une interface 214₁-214₈, ou d'au moins un élément 202-208, optique de l'objectif 200 ;
- au moins une valeur d'épaisseur d'un élément optique 202-208 de l'objectif 200 ;
- au moins une valeur de décentrement d'au moins une interface 214₁-214₈, ou d'au moins un élément 202-208, optique par rapport à l'axe Z, ou relativement à une position de centre d'une autre interface, dans le plan X-Y ; ou
- au moins une valeur d'inclinaison d'au moins une interface 214₁-214₈, ou d'au moins un élément 202-208, optique par rapport à l'axe Z, ou relativement à l'inclinaison une autre interface ;
- au moins une valeur de topographie ou de profil de forme d'au moins une interface optique 214₁-214₈.

De manière générale, le jeu géométrique peut comprendre pour chaque interface optique de l'objectif optique M2 paramètres géométriques avec M2≥1 et préférentiellement M2≥2. Si l'objectif optique comprend N éléments optiques, alors le jeu d'assemblage JG peut comprendre 2N x M2 paramètres géométriques et peut correspondre à une matrice comportant 2N lignes et M2 colonnes. Bien entendu, le jeu d'assemblage peut comprendre un même nombre de paramètres géométriques pour au moins deux interfaces optiques, ou des nombres différents de paramètres géométriques pour au moins deux interfaces optiques.

Le jeu géométrique JG peut comprendre directement les valeurs des paramètres géométriques. Ces valeurs peuvent être mesurées, de manière classique, par interférométrie optique ou par mesure(s) confocale(s), préférentiellement depuis un côté ou une face de l'objectif optique 200, de manière à éviter de le tourner.

Alternativement, le jeu géométrique JG peut comprendre des données de mesure brutes, tel que par exemple des données de mesure d'interférométrie optique ou des données de mesure confocales.

Le jeu géométrique JG donne une indication sur la qualité fonctionnelle, ou la performance, de l'objectif optique. En effet, chaque paramètre géométrique du jeu géométrique peut être comparé à au moins une valeur, ou à une fourchette de valeurs, pour déterminer si la qualité de l'objectif optique est satisfaisante.

Si la qualité de l'objectif optique est satisfaisante, alors l'objectif optique peut être fabriqué.

Si la qualité de l'objectif optique n'est pas satisfaisante, alors l'objectif optique peut être soumis à au moins un autre test, ou ne pas être fabriqué.

Alternativement ou en plus, si la qualité de l'objectif optique n'est pas satisfaisante, alors l'objectif optique peut être retouché pour améliorer sa qualité. Par exemple, au moins un élément optique de l'objectif optique peut être repositionné (par exemple être pivoté suivant un axe de rotation), ou remplacé par un autre élément optique.

Ainsi, il est possible de valider ou non un assemblage d'éléments optiques formant un objectif avant même de réaliser ledit assemblage optique, voire avant même de commencer à fabriquer ledit objectif optique. Cela permet d'augmenter l'efficacité des développements des procédés de fabrication, grâce aux informations sur les composants optiques déduites, et de la production d'objectifs optiques mettant ces procédés en œuvre grâce aux données de prédictions obtenues bien avant la finalisation complète de l'objectif, permettant ainsi, entre autres, de diminuer les pertes à la fois des composants optiques qui peuvent être dirigés vers des assemblages favorables et des objectifs.

En effet, pour un objectif optique, le jeu d'assemblage JA peut être déterminé dès lors que les éléments optiques composants l'objectif optique sont connus, avant même d'empiler les éléments optiques dudit objectif optique.

Plus encore, le jeu d'assemblage JA peut être connu avant même que les éléments optiques composant l'objectif optique ne soient fabriqués. En effet, il suffit de connaître les propriétés de chaque élément optique composant l'objectif optique, par exemple lors de la conception de chaque élément optique. Ainsi, il est possible, avec la présente invention de connaître un indicateur sur la performance de l'objectif optique, à savoir le jeu géométrique, avant même de fabriquer les éléments optiques composant l'objectif optique. Par conséquent, l'invention apporte une assistance et un guidage dans le processus de conception et de fabrication d'un objectif optique, dès les toutes premières phases dudit processus.

En particulier, lors de la phase de conception, l'invention permet de tester la performance de l'objectif optique avec tel ou tel élément optique dans son architecture, ce qui permet d'optimiser l'architecture de l'objectif optique en termes de performance fonctionnelle.

Lors de la phase de fabrication, l'invention permet de surveiller la performance de l'objectif optique en cours de fabrication et, le cas échéant de réaliser un ajustement, par exemple en remplaçant un élément optique ou en modifiant sa position ou son orientation, en vue d'optimiser sa performance fonctionnelle.

La FIGURES 3a est une représentation schématique d'un exemple de réalisation non limitatif d'une mesure d'interférométrie optique pouvant être mise en œuvre dans la présente invention.

Par exemple, la mesure interférométrique représentée de manière schématique sur la FIGURE 3a peut être utilisé pour déterminer un jeu géométrique d'entrainement pour un objectif optique d'entrainement.

La mesure d'interférométrie optique est réalisée par un appareil d'interférométrie optique, ou appareil interférométrique, 300 représenté de manière très schématique, sur la FIGURE 3a. L'appareil 300 comprend une source 302 de lumière et un capteur d'interférométrie 304. La source 302 émet, en direction de l'empilement d'éléments optiques, un faisceau 306 de lumière cohérente, appelé faisceau de mesure, en un point de mesure, ou selon un champ de vue, 308 dans le plan X-Y, perpendiculaire à la direction 210. Le faisceau de mesure 306 parcourt alors l'empilement d'éléments optiques, en particulier dans l'axe Z 210 et traverse chaque interface optique 214ᵢ à tour de rôle. À chaque interface optique 214ᵢ, une partie 310ᵢ du faisceau de mesure 306 est réfléchie, tel qu'un faisceau 310₁ est réfléchi par l'interface 214₁, ..., et un faisceau 310₈ est réfléchi par l'interface 214₈.

Chaque faisceau réfléchi 310ᵢ du faisceau de mesure 306 est alors capté par le capteur 304 se trouvant du même côté que la source d'émission 302, et va produire un signal d'interférence lorsque ce faisceau réfléchi 310ᵢ et un faisceau de référence 312, aussi issu de la source 302 de lumière se recombine sur le capteur 304, la différence des trajets parcourus par les deux faisceaux respectifs étant inférieure à la longueur de cohérence de la source d'émission 302. En particulier, pour chaque faisceau réfléchi 310ᵢ le capteur 304 fournit une raie d'interférence, dite raie principale, ou une image d'interférence, selon les modes d'illumination et de détection mises en œuvre, à une distance optique correspondant à la position de l'interface par rapport à la source d'émission 302, ou tout autre référence prédéterminée. Bien entendu, à part le faisceau 310₁ réfléchi par la première interface 214₁ rencontrée par le faisceau de mesure 306, une partie de chacun des autres faisceaux réfléchis 310₂-310₈ peut, elle-même, être réfléchie dans l'autre sens au passage d'une interface précédente, ce qui peut engendrer des faisceaux optiques à réflexion multiples (non représentés) captés par le capteur 304.Ces faisceaux à réflexions multiples engendrent des raies d'interférence, appelées raies secondaires, ou des images secondaires, généralement de plus faible amplitude.

Les mesures d'interférométrie optique peuvent être réalisées avec un faisceau de mesure d'un capteur interférométrique illuminé par une source lumineuse à faible cohérence. Pour cela, l'appareil d'interférométrie optique dispose de moyens de positionnement pour positionner relativement une zone de cohérence du capteur interférométrique 304 au niveau de l'interface à mesurer. L'interface à mesurer peut être une interface enterrée, c'est-à-dire, l'une des interfaces à l'intérieur de l'objectif optique. Pour arriver à une telle interface enterrée, le faisceau de mesure doit donc traverser d'autres interfaces de l'objectif optique. Le dispositif permet de détecter sélectivement un signal d'interférence pour chaque interface au niveau de laquelle la zone de cohérence est positionnée, c'est-à-dire pour chaque surface se trouvant dans la zone de cohérence puisque la longueur de cohérence de la source lumineuse est ajustée de sorte à être plus courte qu'une distance optique minimale entre deux interfaces optiques adjacentes de l'objectif optique. Ainsi, préférentiellement, pour chaque mesure, une seule interface se trouve dans la zone de cohérence.

Les mesures des interférences peuvent être effectuées selon un champ de vue déterminé par les moyens de mesure de l'appareil. Les mesures peuvent ainsi être réalisées soit en plein champ, soit par balayage du champ de vue.

Des moyens numériques de traitement peuvent être configurés pour produire, à partir du signal d'interférence, une information de forme, ou un paramètre géométrique, de l'interface optique mesurée selon le champ de vue.

Des exemples d'appareils interférométriques pouvant être mis en œuvre dans le cadre de la présente invention sont, par exemple, décrits dans le document WO2020/245511 A1.

La FIGURE 3b donne une représentation schématique et partielle de données de mesures brutes obtenues pour une mesure d'interférométrie optique, telle que celle décrite en référence à la FIGURE 3a.

Dans cet exemple de mise en œuvre, une illumination selon un point de mesure est utilisée, et la zone de cohérence est déplacée le long de l'axe optique Z 210 grâce à des moyens de déplacement.

Ainsi, comme décrit en référence à la FIGURE 3a, chaque mesure d'interférence fournit des données brutes 320. Les données brutes 320 comprennent des raies principales 322ᵢ, chaque raie principale correspondant à une interface optique. Par exemple, on obtient une raie principale 322₁ pour l'interface 214₁, une raie principale 322₂ pour l'interface 214₂, etc. (la raie associée à l'interface 214₈ n'apparaissant pas sur l'exemple illustré par la FIGURE 3b).

Les données brutes 320 comprennent aussi des raies secondaires correspondant à des réflexions multiples, et associées aux interfaces 214₂-214₈.

La position optique de chaque raie est donnée en abscisse et l'amplitude normalisée de chaque raie est donnée en ordonnées.

Les FIGURES 3c-3f sont des représentations schématiques et partielles d'un autre exemple de données de mesures brutes obtenues pour une mesure d'interférométrie optique, telle que celle décrite en référence à la FIGURE 3a.

Dans l'exemple représenté sur les FIGURES 3c-3f, une illumination selon un mode plein champ est utilisée et la zone de cohérence a été positionnée afin de mesurer une surface de lentille enterrée. La FIGURE 3c présente le signal d'interférence détecté lors d'une mesure de microscopie par holographie numérique (« Digital Holography Microscopy (DHM)», en anglais). Les FIGURES 3d et 3e représentent respectivement les images d'amplitude et de phase (dans cet exemple repliée) calculées à partir du signal d'interférence. La FIGURE 3f est une image de la topographie de la surface d'une lentille enterrée obtenue à partir de l'information de phase.

Suivant des modes de réalisation, le jeu géométrique peut comprendre des données de mesure brutes, en partie ou en totalité, à savoir :
- dans une configuration d'illumination selon un point de mesure, par exemple :
   ▪la position, et éventuellement l'amplitude, de chaque raie principale, ou
   ▪la position, et éventuellement l'amplitude, de chaque raie (principale et secondaire) ;
- dans une configuration d'illumination selon un champ de vue, par exemple :
   ▪l'image d'interférence détectée par le capteur d'interférométrie 204,
   ▪l'image d'amplitude associée à l'image d'interférence et/ou l'image de phase associée à l'image d'interférence, ou
   ▪l'image de topographie associée à l'image d'interférence.

Suivant des modes de réalisation, le jeu géométrique peut comprendre, non pas des données de mesure brutes obtenues par une mesure d'interférométrie optique, mais des valeurs de paramètres géométriques relatives aux interfaces optiques de l'objectif optique, à savoir :
- la position, le long de l'axe Z, de chaque interface 214ᵢ ou de chaque élément optique 302-308. Ces valeurs de distances peuvent être obtenues à partir des données brutes d'une seule mesure interférométrique. Dans ce cas, le jeu géométrique comprend une valeur de distance par interface, respectivement par élément optique ;
- le décentrement par rapport à l'axe Z ou relativement à d'autres interfaces, dans le plan X-Y, de chaque interface 214ᵢ ou de chaque élément optique 202-208. Ces valeurs de décentrement peuvent être déduites à partir d'une image d'interférence associée à une interface optique, par exemple. Dans ce cas, le jeu géométrique comprend deux valeurs (signées) de distance (une selon l'axe X et l'autre selon l'axe Y) pour chaque interface, respectivement élément optique ;
- l'inclinaison par rapport à l'axe Z, ou à l'inclinaison d'autres interfaces optiques de chaque interface optique 214ᵢ ou de chaque élément optique 202-208. Ces valeurs d'inclinaison peuvent être déduites à partir de plusieurs mesures interférométriques réalisées en différents points de mesure, en particulier dans une zone périphérique de l' objectif optique. Dans ce cas, le jeu géométrique comprend deux valeurs d'angle (une par rapport l'axe X et l'autre par rapport à l'axe Y) pour chaque interface, respectivement élément optique.

On comprend en référence à la FIGURE 3a que la mesure d'un jeu géométrique pour un objectif optique ne peut être réalisé que si les éléments optiques sont empilés. Or, lorsque les éléments optiques de l'objectif optique sont déjà empilés, l'objectif optique se trouve déjà dans un stade de fabrication assez avancé, voir presque finalisé. L'invention propose un outil de caractérisation géométrique permettant d'estimer le jeu géométrique à un stade beaucoup plus tôt lors du processus de fabrication de l'objectif optique, voire même au stade de la conception de l'objectif optique, ou encore au stade de la conception de chaque élément de l'objectif optique.

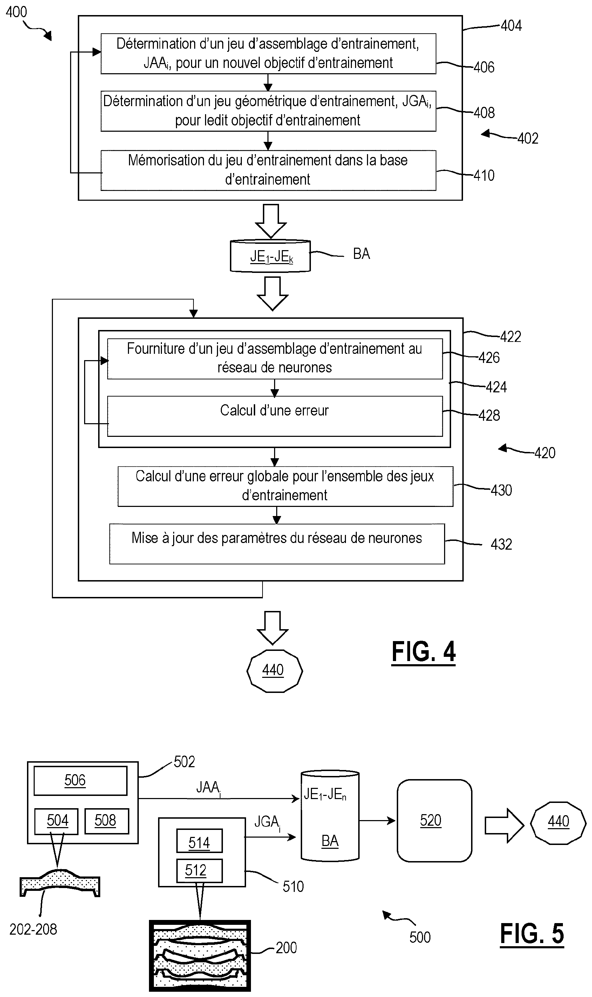

La FIGURE 4 est une représentation schématique d'un exemple de réalisation non limitatif d'un procédé d'obtention d'un outil caractérisation géométrique d'un objectif optique cible à fabriquer.

Le procédé 400 de la FIGURE 4 comprend une phase 402 de constitution d'une base d'entrainement, notée BA, comprenant une multitude de jeu d'entrainement, noté JE₁-JEₖ. Chaque jeu d'entrainement JEᵢ comprend :
- un jeu d'assemblage d'entrainement, et noté JAAᵢ ; et
- un jeu géométrique d'entrainement, et noté JGAᵢ.

La phase 402 comprend une étape 404 de détermination d'un jeu d'entrainement JE pour un objectif d'entrainement, qui peut par exemple être l'objectif 200 de la FIGURE 2.

L'étape 404 comprend une étape 406 d'obtention d'un jeu d'assemblage d'entrainement, JAAᵢ, pour l'objectif d'entrainement.

Le jeu d'assemblage d'entrainement JAAᵢ peut être obtenu tel que décrit plus haut en référence à la FIGURE 1, c'est-à-dire à partir du jeu individuel de chaque élément optique composant l'objectif optique d'entrainement. Ainsi, si l'objectif optique d'entrainement comprend N éléments optiques, JAAᵢ={JI₁-JIₙ}, avec JIᵢ le jeu individuel de l'élément optique « i ». Tel que décrit en référence à la FIGURE 1, au moins un paramètre du jeu individuel de chaque élément optique peut être obtenu par mesure sur l'élément optique réel, ou par mesure simulée à partir d'une modélisation numérique dudit élément optique, ou encore fourni par un fournisseur ou un fabriquant de l'élément optique.

Ainsi, pour un objectif optique d'entrainement, réel ou simulé, l'étape 406 fournit un jeu d'assemblage d'entrainement JAAᵢ.

L'étape 404 comprend une étape 408 d'obtention d'un jeu géométrique d'entrainement, JGAᵢ, pour l'objectif d'entrainement.

Le jeu géométrique d'entrainement JGAᵢ peut comprendre des données brutes de mesure, par exemple de mesure interférométrique telles que celles des FIGURES 3b-3f, ou de données de mesure confocales, etc.

Alternativement, le jeu géométrique d'entrainement JGAᵢ peut comprendre des valeurs d'au moins un paramètre géométrique relatif à au moins une interface optique, ou un élément optique, de l'objectif d'entrainement, tel qu'une distance géométrique dans l'axe Z par rapport à une référence, une épaisseur, une inclinaison par rapport à l'axe Z, un décentrement par rapport à l'axe Z dans le plan X-Y, etc.

Le jeu géométrique d'entrainement JGAᵢ peut être obtenu par une mesure, par exemple une mesure interférométrique telle que décrite en référence à la FIGURE 3a, réalisée par au moins un dispositif d'interférométrie sur un objectif d'entrainement réel.

Alternativement, le jeu géométrique d'entrainement JGAᵢ peut être obtenu par simulation, à partir d'une modélisation numérique de l'objectif d'entrainement. Dans ce cas, le géométrique d'entrainement JGAᵢ est mesuré par simulation. Par exemple, l'architecture optique de l'objectif d'entrainement peut être modélisée en représentant les interfaces optiques (particulièrement celles des lentilles) par des formulations analytiques et en indiquant numériquement leurs espacements. Les valeurs théoriques d'indice de réfraction et de nombre d'Abbé des matériaux impliqués peuvent aussi données. Les données brutes d'interférométrie, telles que décrites précédemment, peuvent alors être simulées à partir de l'architecture modélisée de l'objectif d'entrainement. Les signaux d'interférence et/ou les séquences de signaux d'interférence peuvent être reconstitués en modélisant la propagation d'un faisceau incident et la rétropropagation des faisceaux réfléchis dans un objectif d'entrainement modélisé dont les paramètres de l'architecture sont connus. Ces valeurs brutes obtenues par simulation peuvent ensuite être utilisées comme géométrique d'entrainement JGAᵢ, ou être utilisées pour calculer pour obtenir le jeu géométrique d'entrainement JGAᵢ.

Ainsi, pour un objectif optique d'entrainement, réel ou simulé, l'étape 408 fournit un jeu géométrique d'entrainement JGAᵢ.

Le jeu d'assemblage d'entrainement JAAᵢ obtenu à l'étape 406 et le jeu géométrique d'entrainement JGAᵢ obtenue lors de l'étape 408 formant un jeu d'entrainement JEᵢ. Lors d'une étape 410, le jeu d'entrainement JEᵢ ainsi obtenu est mémorisé dans la base d'entrainement BA.

L'étape 404 est réitérée pour une multitude d'objectifs optiques d'entrainement de sorte à obtenir une base d'apprentissage comprenant une multitude de jeux d'entrainement JE₁-JEₖ.

Le procédé 400 comprend ensuite phase d'entrainement 420 d'un modèle de caractérisation géométrique avec la base d'entrainement BA.

Le modèle de caractérisation géométrique peut être par exemple un réseau de neurones CNN, (pour « Convolutionnal Neural Network »), comportant au moins une couche cachée par exemple. Il est important de noter que le nombre de couches du CNN est fonction du nombre de données dans l'au moins un jeu d'assemblage fourni en entrée dudit réseau de neurones, et du nombre de données dans l'au moins un jeu géométrique estimé souhaité en sortie dudit réseau de neurones.

La phase d'entrainement 420 comprend plusieurs itérations d'une étape d'entrainement 422.

L'étape d'entrainement 422 comprend une étape de test 424.

L'étape de test 424 comprend une étape 426 lors de laquelle un jeu d'assemblage d'entrainement, par exemple JAA₁, d'un jeu d'entrainement, par exemple JE₁, est donné en entrée du réseau de neurones. Le réseau de neurones donne en sortie un jeu géométrique d'entrainement estimé, noté JGA₁^{e}.

Lors d'une étape 428 de l'étape de test 424, une erreur, E₁, peut être calculée entre le jeu JGAᵢ^{e} et le jeu JGA₁. L'erreur calculée E₁ peut par exemple être une distance euclidienne ou une distance cosinus entre le jeu JGA₁^{e} et le jeu JGA₁.

L'étape de test 424 peut être réitérée pour chaque jeu d'entrainement JE₁-JEₖ, de sorte qu'il est obtenu k valeurs d'erreur E₁-Eₖ associées respectivement à chaque jeu d'entrainement JE₁-JEₖ.

L'étape d'entrainement 422 peut ensuite comprendre une étape 430 de calcul d'une erreur globale, EG, pour l'ensemble des jeux d'entrainement, JE₁-JEₖ, par exemple en additionnant les k erreurs JE₁-JEₖ obtenues.

L'étape d'entrainement 422 peut ensuite comprendre une étape 432 de rétroaction, lors de laquelle les coefficients, ou poids, du réseau de neurones CNN peuvent être mis à jour, partiellement ou totalement, par exemple par un algorithme de rétropropagation du gradient de l'erreur.

L'étape d'entrainement 422 peut être répétée plusieurs fois jusqu'à ce que l'erreur global EG ne varie plus pendant plusieurs, par exemple cinq, itérations successives. Lorsque c'est le cas, le réseau de neurones CNN peut être considéré suffisamment entrainé et la phase d'entrainement peut être terminée.

Alternativement, ou en plus de ce qui vient d'être décrit, il est possible d'utiliser une première partie de la base d'entrainement BA, par exemple JE₁-JEⱼ, pour l'entrainement du réseau de neurones et une deuxième partie de la base d'entrainement BA, par exemple JEⱼ₊₁-JEₖ, pour valider l'entrainement du réseau de neurones. Si les sorties du réseau de neurones obtenues sont assez proches des valeurs attendues, l'apprentissage peut être considéré comme acceptable. Sinon, plus de jeux d'entrainements peuvent présentés, ou bien la topologie du réseau est modifiée (nombre de couches, nombre de neurones par couches...) jusqu'à obtention d'un apprentissage satisfaisant.

Bien entendu, le modèle de caractérisation géométrique 440 obtenu par le procédé 400 n'est pas limité à un réseau de neurones.

Suivant une alternative, le modèle de caractérisation géométrique peut comprendre, ou peut être, une méthode de recherche de corrélations, par exemple par méthode de régression, entre le jeu d'assemblage d'entrainement JAAᵢ et le jeu de géométrique d'entrainement JGAᵢ de chaque jeu d'entrainement JEᵢ.

Suivant un exemple de réalisation, la recherche des corrélations peut se faire via une méthode des moindres carrés. Elle peut consister à la mise en place d'une relation polynomiale supposée entre les JAAᵢ et JGAᵢ, et cela pour chaque JEᵢ. Ensuite, la méthode des moindres carrés permet de trouver le meilleur jeu de coefficients des polynômes qui minimise l'erreur entre les sorties calculées par les polynômes obtenus et les JGAᵢ.

La FIGURE 5 est une représentation schématique d'un exemple de réalisation non limitatif d'un dispositif selon l'invention d'obtention d'un outil de caractérisation géométrique d'un objectif optique lors de sa fabrication.

En particulier, le dispositif 500 peut être configuré pour mettre en œuvre le procédé 400 de la FIGURE 4.

Le dispositif 500 comprend un module 502 de détermination d'un jeu d'assemblage d'entrainement JAAᵢ pour un objectif d'entrainement, qui peut être par exemple l'objectif 200 de la FIGURE 2. Tel que décrit plus haut, le jeu d'assemblage d'entrainement JAAᵢ est formé par les jeux individuels de tous les éléments optiques 202-208 formant l'objectif optique d'entrainement 200.

Pour ce faire, le module 502 peut comprendre un appareil de mesure 504 pour mesurer au moins un paramètre individuel d'un élément optique. Un tel appareil de mesure peut comprendre l'un quelconque d'au moins un des appareils suivants :
- un appareil d'interférométrie optique, tel que par exemple l'appareil 300 de la FIGURE 3a ;
- un appareil de mesure confocale,
- un appareil de profilométrie mécanique ou optique.

Le module 502 peut comprendre une interface 506 de saisie de données permettant la saisie d'une valeur d'au moins un paramètre d'un élément optique.

Le module 502 peut comprendre un module informatique 508 permettant de modéliser, sous une forme numérique, un élément optique et de mesurer au moins un paramètre dudit élément optique.

Le dispositif 500 comprend en outre un module 510 de détermination d'un jeu géométrique d'entrainement JGAᵢ pour l'objectif d'entrainement 200.

Le module 510 peut comprendre un appareil de mesure optique 512 pour mesurer au moins un paramètre géométrique d'au moins une interface optique de l'objectif optique d'entrainement 200. Un tel appareil de mesure 512 peut comprendre l'un quelconque d'au moins un des appareils suivants :
- un appareil d'interférométrie optique, tel que par exemple l'appareil 300 de la FIGURE 3a ; ou
- un appareil de mesure confocale.

Le module 510 peut comprendre un module informatique 514 permettant de modéliser, sous une forme numérique, l'objectif optique d'entrainement, et de mesurer la valeur d'au moins un paramètre géométrique d'au moins une interface optique de l'objectif optique d'entrainement 200.

En particulier, les modules 502 et 510 peuvent être configurés pour mettre en œuvre la phase 402 de constitution d'une base d'entrainement du procédé 400 de la FIGURE 4.

Le dispositif 500 comprend en outre une unité informatique 520 pour mettre en œuvre un entrainement d'un modèle de caractérisation géométrique, tel que par exemple le modèle de caractérisation 440 de la FIGURE 4, tel que par exemple :
- un réseau de neurones, ou
- un modèle de régression linéaire de polynômes,
- une équation gaussienne, obtenue par une méthode des moindres carrés,
- une méthode d'analyse statistique,
- etc.

L'unité informatique 520 peut être tout module de calcul ou tout module informatique tel qu'un serveur, un ordinateur, une tablette, un processeur, un calculateur, une puce électronique, etc.

En particulier, l'unité informatique peut être programmée pour mettre en œuvre la phase d'entrainement 420 de la FIGURE 4.

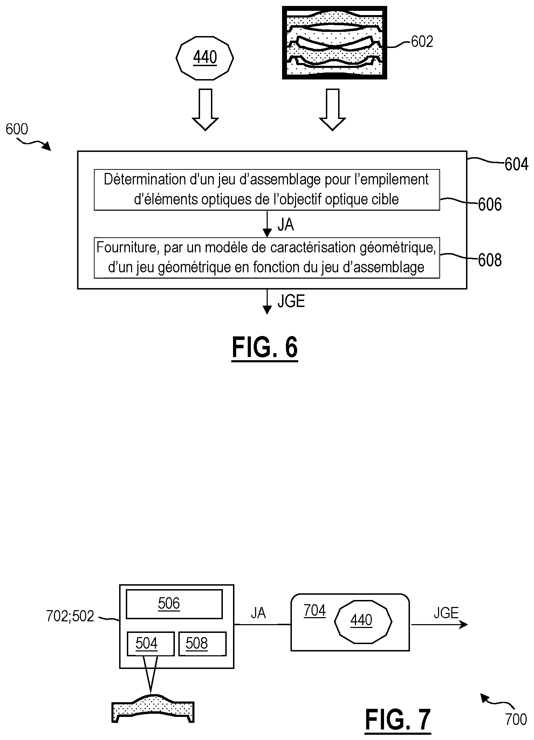

La FIGURE 6 est une représentation schématique d'un exemple de réalisation non limitatif d'un procédé selon l'invention de caractérisation géométrique d'un objectif optique.

Le procédé 600 de la FIGURE 6 peut être utilisé pour la caractérisation géométrique d'un objectif optique cible 602 comprenant plusieurs éléments optiques. L'objectif optique cible 602 peut par exemple être identique à l'objectif optique 200 de la FIGURE 2 ou un objectif optique présentant la même architecture, sans y être limité.

Le procédé 600 comprend une phase 604 de caractérisation géométrique de l'objectif optique cible à fabriquer 602.

La phase de caractérisation 604 comprend une étape 606 de détermination d'un jeu d'assemblage à partir du jeu individuel, JI, de chaque élément optique composant l'empilement d'éléments optiques de l'objectif optique cible 602, tel que décrit plus haut. Le jeu individuel JI de chaque élément optique peut comprendre un ou plusieurs paramètres relatifs audit élément optique, tels que les paramètres décrits plus haut, en référence à la FIGURE 1.

Pour chaque élément optique, au moins un paramètre peut être déterminé soit à partir d'informations fournies par le fabricant, soit par mesure, soit par simulation, tel que décrit plus haut.

Cette étape 606 fournit pour l'empilement d'éléments optiques de l'objectif optique un jeu d'assemblage JA comprenant au moins un paramètre caractéristique d'au moins un, et particulier de chaque, élément optique.

La phase de caractérisation 604 comprend une étape 608 lors de laquelle le jeu d'assemblage JA est fourni à un modèle de caractérisation géométrique préalablement entrainé. En réponse, le modèle de caractérisation géométrique fournit un jeu géométrique estimé JGE pour ledit objectif cible.

Le jeu géométrique JGE peut comprendre soit des valeurs de paramètres géométriques d'au moins une, et en particulier de chaque, interface optique de l'empilement, tel que par exemple les paramètres géométriques décrits en référence aux FIGURES 3a-3f (alignement, décentrement, etc.).

Le jeu géométrique JGE peut alternativement comprendre des valeurs brutes estimées de mesure(s) optique(s), tels que des mesures d'interférométrie optique, ou des mesures confocales, relatives à au moins une, et en particulier à chaque, interface optique de l'empilement, tel que par exemple celles décrites en référence aux FIGURES 3a-3f (signal d'interférence, raies d'interférence, etc.).

Ainsi, le procédé 600 permet une caractérisation géométrique de l'objectif optique cible par estimation avec un modèle de caractérisation géométrique préalablement entrainé, sans réaliser de mesure sur l'empilement d'éléments optiques de l'objectif optique, voire avant même de commencer à fabriquer ledit objectif optique ou les éléments optiques qui le composent. Ainsi, il est possible d'avoir des indicateurs relatifs à la qualité de l'objectif optique avant de le fabriquer et décider de fabriquer ou non ledit objectif. Par exemple, il est possible d'éviter de fabriquer un objectif optique dont la qualité estimée n'est pas suffisante.

Plus encore, le procédé 600 permet la mise en œuvre de plans d'expérimentations (DOE- « Design of Experiments ») pour faire l'analyse des paramètres des composants, de les classifier suivant les résultats de la caractérisation géométrique obtenue afin, par exemple, de rejeter certains composants très en amont dans la fabrication, de pouvoir apparier des classes entre différents composants optiques ou d'appliquer des corrections inhérentes à cette classe (modification de l'espacement, rotation de la lentille,...).

La FIGURE 7 est une représentation schématique d'un exemple de réalisation non limitatif d'un dispositif selon l'invention de caractérisation géométrique d'un objectif optique.

Le dispositif 700 peut être utilisé pour caractériser au moins un objectif optique cible à fabriquer, tel que par exemple l'objectif optique 602 de la FIGURE 6, sans y être limité

En particulier, le dispositif 700 peut être configuré pour mettre en œuvre le procédé de caractérisation 600 de la FIGURE 6.

Le dispositif 700 comprend un module 702 pour déterminer un jeu d'assemblage, à partir des caractéristiques de chaque élément optique composant l'objectif optique cible. Le module 702 peut par exemple être le module 502 de la FIGURE 5 pour déterminer le jeu d'assemblage d'entrainement. Le module 702 fournit un jeu d'assemblage JA pour l'objectif cible à fabriquer.

Le dispositif 700 comprend en outre un module 704 de caractérisation exécutant un modèle de caractérisation géométrique prenant en entrée le jeu d'assemblage JA fourni par le module 702 et fournissant, en sortie, un jeu géométrique estimé JGE. Le modèle de caractérisation géométrique exécuté par le module 704 peut être le modèle 440 de la FIGURE 4, et plus généralement un programme ou une application informatique, et se présenter sous la forme :
- d'un réseau de neurones, en particulier régressif, et encore plus particulièrement un réseau de neurones CNN à apprentissage profond, ou
- un modèle de régression linéaire de polynômes,
- une équation gaussienne, obtenue par une méthode des moindres carrés,
- une méthode d'analyse statistique,
- etc.

Le module de caractérisation 704 est un module informatique exécutant le modèle de caractérisation 440, tel qu'un serveur, un ordinateur, une tablette, un processeur, un calculateur, une puce électronique, etc.

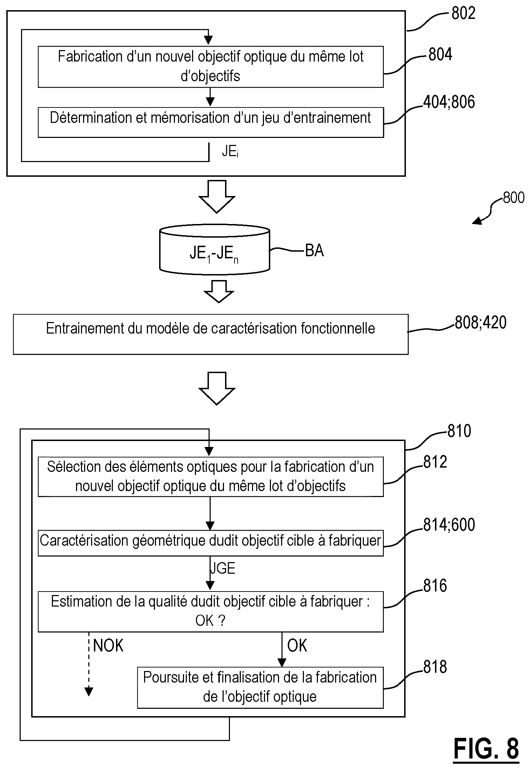

La FIGURE 8 est une représentation schématique d'un exemple de réalisation non limitatif d'un procédé selon l'invention de fabrication d'objectifs optiques.

Le procédé 800 peut comprendre une première phase 802 de fabrication lors de laquelle une première partie d'un lot d'objectifs est fabriqué. Cette première partie comprend une multitude d'objectifs optiques. Lors de cette phase 802 un objectif optique est fabriqué lors d'une étape 804. Un jeu d'entrainement est déterminé et mémorisé, lors d'une étape 806, en vue de constituer une base d'entrainement, tel que par exemple la base d'entrainement BA. Cette étape 806 peut être identique à l'étape 404 de détermination d'un jeu d'entrainement de la FIGURE 4.

La phase 802 est réitérée pour une multitude d'objectifs optiques formant la première partie du lot d'objectifs optiques.

Puis, lors d'une étape 808, le modèle de caractérisation géométrique est entrainé avec la base d'entrainement BA, par exemple en mettant œuvre la phase d'entrainement 420 de la FIGURE 4.

Le procédé 800 peut ensuite comprendre une deuxième phase 810 de fabrication lors de laquelle les objectifs restant du lot sont fabriqués.

Cette phase 810 comprend, pour chaque objectif optique, les étapes suivantes.

Lors d'une étape 812, les éléments optiques qui vont constituer l'objectif optique sont sélectionnés.

Lors d'une étape 814, une caractérisation géométrique de l'objectif optique est réalisée. Cette étape de caractérisation 814 peut être identique au procédé de caractérisation géométrique 600 de la FIGURE 6. Cette étape de caractérisation géométrique fournit un jeu géométrique estimé JGE pour l'objectif optique.

Ensuite, lors d'une étape 816 le jeu géométrique estimé peut être utilisé pour déterminer si la qualité de l'objectif optique à fabriquer est satisfaisante. Pour ce faire, au moins une valeur du jeu géométrique estimé peut être comparée à au moins une valeur prédéterminée donnant ainsi une indication sur la qualité fonctionnelle, ou la performance, de l'objectif optique à fabriquer.

Si le jeu géométrique estimé JGE témoigne d'une qualité satisfaisante l'objectif optique, la fabrication de l'objectif optique peut être commencée ou poursuivie lors d'une étape 818.

Si le jeu géométrique estimé témoigne d'une qualité insuffisante, alors la fabrication de l'objectif optique peut être annulée. Alternativement, si le jeu géométrique estimé JGE témoigne d'une qualité insuffisante, alors la composition de l'objectif optique peut être retouchée. Par exemple, au moins un élément optique de l'objectif optique peut être remplacé ou repositionné.

Bien entendu l'invention n'est pas limitée aux exemples qui viennent d'être décrits.

## Revendications

1. Procédé (400) mis en oeuvre par ordinateur d'obtention d'un modèle de caractérisation géométrique (440) d'un objectif optique cible (602) à fabriquer par empilement de plusieurs éléments optiques, ledit procédé (400) le procédé étant **caractérisé en ce qu'**il comprend: :
- une phase (402) de constitution d'une base (BA), dite base d'entrainement, de jeux d'entrainement, chaque jeu d'entrainement comprenant pour un objectif optique (200), dit objectif d'entrainement, de même architecture que l'objectif optique cible (602) :
▪un jeu de données (JAAᵢ), dit jeu d'assemblage d'entrainement, comprenant, pour chacun d'au moins deux des éléments optiques (202-208) dudit objectif d'entrainement (200), un jeu de données, dit jeu individuel, comprenant au moins un paramètre caractéristique dudit élément optique (202-208), et
▪un jeu de données (JGAᵢ), dit jeu géométrique d'entrainement, comprenant des données relatives à au moins un paramètre géométrique pour chacune d'au moins deux des interfaces optiques (214₁-214₈) de l'empilement d'éléments optiques (202-208) de l'objectif optique d'entrainement (200) ; et
- une phase (420) d'entrainement d'un modèle de caractérisation géométrique (440) avec ladite base d'entrainement (BA) avec les jeux d'assemblage d'entrainement comme entrée dudit modèle et les jeux géométriques d'entrainement comme sortie dudit modèle.

2. Procédé (400) selon la revendication précédente, **caractérisé en ce qu'**au moins un jeu individuel d'un élément optique (202-208) de l'objectif d'entrainement (200) comprend une combinaison quelconque d'au moins un des paramètres suivants :
- au moins un paramètre optique dudit élément optique ;
- au moins un paramètre géométrique dudit élément optique ;
- au moins un paramètre de fabrication dudit élément optique.

3. Procédé (400) selon l'une quelconque des revendications précédentes, **caractérisé en ce qu'**au moins un paramètre d'un élément optique (202-208) de l'objectif optique d'entrainement (200) est :
- fourni par un fournisseur dudit élément optique,
- mesuré par un dispositif de mesure (504), ou
- calculé à partir d'une modélisation numérique dudit élément optique.

4. Procédé (400) selon l'une quelconque des revendications précédentes, **caractérisé en ce que** le jeu géométrique d'entrainement (JGAᵢ) comprend des données d'une partie, ou de la totalité, de valeurs brutes de mesure(s) optique(s) obtenues à partir de l'empilement d'éléments optiques (202-208) de l'objectif d'entrainement (200).

5. Procédé (400) selon l'une quelconque des revendications 1 à 3, **caractérisé en ce que** le jeu géométrique d'entrainement (JGAᵢ) comprend une valeur d'au moins un paramètre géométrique d'une interface optique (214₁-214₈), en particulier d'une interface optique enterrée (214₂-214₈), de l'objectif d'entrainement (200).

6. Procédé (400) selon l'une quelconque des revendications précédentes, **caractérisé en ce que**, pour au moins un jeu d'entrainement (JEᵢ), le jeu géométrique d'entrainement (JGAᵢ) est obtenu par simulation, à partir d'une modalisation numérique d'un objectif optique d'entrainement (200).

7. Procédé (400) selon l'une quelconque des revendications précédentes, **caractérisé en ce que**, pour au moins un jeu d'entrainement (JEᵢ), le jeu géométrique d'entrainement (JGAᵢ) est obtenu par mesure avec un appareil de mesure (300;512), sur un objectif d'entrainement (200) réel.

8. Procédé (400) selon l'une quelconque des revendications précédentes, **caractérisé en ce que** la base d'entrainement (BA) comprend au moins un jeu d'entrainement obtenu à partir d'un objectif optique d'entrainement faisant partie d'un même lot d'objectifs optiques que l'objectif cible, lors de la fabrication dudit lot d'objectifs optiques.

9. Procédé (400) selon l'une quelconque des revendications précédentes, **caractérisé en ce que** le modèle de caractérisation géométrique (400) comprend :
- un réseau de neurones (440), en particulier régressif, et encore plus particulièrement un réseau de neurones CNN à apprentissage profond,
- un modèle de régression linéaire de polynômes,
- une équation gaussienne, obtenue par une méthode des moindres carrés, ou
- une méthode d'analyse statistique.

10. Module informatique (704) configuré pour exécuter le modèle de caractérisation géométrique (440) obtenu par le procédé (400) selon l'une quelconque des revendications précédentes.

11. Dispositif (500) d'obtention d'un modèle de caractérisation géométrique d'un objectif optique cible (602) à fabriquer par empilement de plusieurs éléments optiques, ledit dispositif (500) le dispositif étant **caractérisé en ce qu'**il comprend :
- des moyens (502;510) constitution d'une base (BA), dite base d'entrainement, de jeux d'entrainement, chaque jeu d'entrainement (JEᵢ) comprenant pour un objectif optique (200), dit objectif d'entrainement, de même architecture que l'objectif optique cible (602) :
▪un jeu de données (JAAᵢ), dit jeu d'assemblage d'entrainement, comprenant, pour chacun d'au moins deux des éléments optiques (202-208) dudit objectif d'entrainement (200), un jeu de données, dit jeu individuel, comprenant au moins un paramètre caractéristique dudit élément optique, et
▪un jeu de données (JGAᵢ), dit jeu géométrique d'entrainement, comprenant des données relatives à au moins un paramètre géométrique pour chacune d'au moins deux des interfaces optiques (214₁-214₈) de l'empilement d'éléments optiques (202-208) de l'objectif optique d'entrainement (200) ; et
- une unité informatique (520) d'entrainement d'un modèle de caractérisation géométrique (440) avec ladite base d'entrainement (BA) avec les jeux d'assemblage d'entrainement comme entrée dudit modèle et les jeux géométriques d'entrainement comme sortie dudit modèle.

12. Procédé (600) de caractérisation géométrique d'un objectif optique cible (602) à fabriquer comprenant un empilement de plusieurs éléments optiques, ledit procédé (600) **caractérisé en ce qu'**il comprend les étapes suivantes :
- obtention (606) d'un jeu de données (JA), dit jeu d'assemblage, comprenant, pour chacun d'au moins deux des éléments optiques dudit objectif cible, un jeu de données, dit jeu individuel, comprenant au moins un paramètre caractéristique dudit élément optique ; et
- fourniture (608), par le modèle de caractérisation géométrique (440), obtenu par le procédé selon l'une quelconque des revendications 1 à 9, prenant en entrée ledit jeu d'assemblage (JA), d'un jeu de données (JGE), dit jeu géométrique estimé, comprenant des données relatives à au moins un paramètre géométrique pour chacune d'au moins deux des interfaces optiques de l'empilement d'éléments optiques de l'objectif optique cible.

13. Dispositif (700) de caractérisation géométrique d'un objectif optique cible (602) à fabriquer comprenant un empilement de plusieurs éléments optiques, ledit dispositif (700) **caractérisé en ce qu'**il comprend :
- des moyens (702;502) d'obtention d'un jeu de données (JA), dit jeu d'assemblage, comprenant, pour chacun d'au moins deux des éléments optiques dudit objectif cible (602), un jeu de données, dit jeu individuel, comprenant au moins un paramètre caractéristique dudit élément optique ; et
- le module informatique (704) selon la revendication 10, prenant en entrée ledit jeu d'assemblage (JA), pour fournir un jeu de données (JGE), dit jeu géométrique estimé, comprenant des données relatives à au moins un paramètre géométrique pour chacune d'au moins deux des interfaces optiques de l'empilement d'éléments optiques de l'objectif optique cible.

## Patentansprüche

1. Computerimplementiertes Verfahren (400) zum Erhalten eines Modells für die geometrische Charakterisierung (440) eines optischen Zielobjektivs (602), das durch Stapeln mehrerer optischer Elemente herzustellen ist, wobei das Verfahren (400) **dadurch gekennzeichnet ist, dass** es umfasst:
- eine Phase (402) des Bildens einer Basis (BA), Trainingsbasis genannt, von Trainingssätzen, wobei jeder Trainingssatz für ein optisches Objektiv (200), Trainingsobjektiv genannt, der gleichen Architektur wie das optische Zielobjektiv (602) umfasst:
▪ einen Datensatz (JAAᵢ), Trainingsmontagesatz genannt, welcher für jedes von mindestens zwei der optischen Elemente (202-208) des Trainingsobjektivs (200) einen Datensatz, Einzelsatz genannt, umfasst, umfassend mindestens einen charakteristischen Parameter des optischen Elements (202-208), und
▪ einen Datensatz (JGAᵢ), geometrischer Trainingssatz genannt, welcher Daten bezüglich mindestens eines geometrischen Parameters für jede von mindestens zwei der optischen Grenzflächen (214₁-214₈) des Stapels von optischen Elementen (202-208) des optischen Trainingsobjektivs (200) umfasst; und
- eine Trainingsphase (420) eines Modells für die geometrische Charakterisierung (440) mit der Trainingsbasis (BA) mit den Trainingsmontagesätzen als Eingabe für das Modell und den geometrischen Trainingssätzen als Ausgabe des Modells.

2. Verfahren (400) nach dem vorstehenden Anspruch, **dadurch gekennzeichnet, dass** mindestens ein Einzelsatz eines optischen Elements (202-208) des Trainingsobjektivs (200) eine beliebige Kombination von mindestens einem der folgenden Parameter umfasst:
- mindestens einen optischen Parameter des optischen Elements;
- mindestens einen geometrischen Parameter des optischen Elements;
- mindestens ein Herstellungsparameter des optischen Elements.

3. Verfahren (400) nach einem der vorstehenden Ansprüche, **dadurch gekennzeichnet, dass** mindestens ein Parameter eines optischen Elements (202-208) des optischen Trainingsobjektivs (200) ist:
- bereitgestellt durch einen Lieferanten des optischen Elements,
- gemessen durch eine Messvorrichtung (504) oder
- berechnet aus einer numerischen Modellierung des optischen Elements.

4. Verfahren (400) nach einem der vorstehenden Ansprüche, **dadurch gekennzeichnet, dass** der geometrische Trainingssatz (JGAᵢ) Daten eines Teils oder der Gesamtheit von Rohwerten einer optischen Messung/von optischen Messungen umfasst, die aus dem Stapel von optischen Elementen (202-208) des Trainingsobjektivs (200) erhalten werden.

5. Verfahren (400) nach einem der Ansprüche 1 bis 3, **dadurch gekennzeichnet, dass** der geometrische Trainingssatz (JGAᵢ) einen Wert von mindestens einem geometrischen Parameter einer optischen Grenzfläche (214₁-214₈), insbesondere einer eingebetteten optischen Grenzfläche (214₂-214₈), des Trainingsobjektivs (200) umfasst.

6. Verfahren (400) nach einem der vorstehenden Ansprüche, **dadurch gekennzeichnet, dass** für mindestens einen Trainingssatz (JEᵢ) der geometrische Trainingssatz (JGAᵢ) durch Simulation aus einer numerischen Modellierung eines optischen Trainingsobjektivs (200) erhalten wird.

7. Verfahren (400) nach einem der vorstehenden Ansprüche, **dadurch gekennzeichnet, dass** für mindestens einen Trainingssatz (JEᵢ) der geometrische Trainingssatz (JGAᵢ) durch Messung mit einem Messgerät (300;512) an einem realen Trainingsobjektiv (200) erhalten wird.

8. Verfahren (400) nach einem der vorstehenden Ansprüche, **dadurch gekennzeichnet, dass** die Trainingsbasis (BA) mindestens einen Trainingssatz umfasst, der aus einem optischen Trainingsobjektiv, das Teil derselben Charge von optischen Objektiven wie das Zielobjektiv ist, während der Herstellung der Charge von optischen Objektiven erhalten wird.

9. Verfahren (400) nach einem der vorstehenden Ansprüche, **dadurch gekennzeichnet, dass** das Modell für die geometrische Charakterisierung (400) umfasst:
- ein neuronales Netz (440), insbesondere regressiv, und noch spezieller ein neuronales CNN-Netz mit Deep Learning,
- ein lineares Regressionsmodell von Polynomen,
- eine Gaußsche Gleichung, erhalten durch eine Methode der kleinsten Quadrate, oder
- ein Verfahren einer statistischen Analyse.

10. Computermodul (704), das zum Ausführen des Modells für die geometrische Charakterisierung (440), das durch das Verfahren (400) nach einem der vorstehenden Ansprüche erhalten wird, konfiguriert ist.

11. Vorrichtung (500) für die Erhaltung eines Modells für die geometrische Charakterisierung eines optischen Zielobjektivs (602), das durch Stapeln mehrerer optischer Elemente herzustellen ist, wobei die Vorrichtung (500) **dadurch gekennzeichnet ist, dass** sie umfasst:
- Mittel (502; 510) zum Bilden einer Basis (BA), Trainingsbasis genannt, von Trainingssätzen, wobei jeder Trainingssatz (JEᵢ) für ein optisches Objektiv (200), Trainingsobjektiv genannt, der gleichen Architektur wie das optische Zielobjektiv (602) umfasst:
▪ einen Datensatz (JAAᵢ), Trainingsmontagesatz genannt, welcher für jedes von mindestens zwei der optischen Elemente (202-208) des Trainingsobjektivs (200) einen Datensatz, Einzelsatz genannt, umfasst, umfassend mindestens einen charakteristischen Parameter des optischen Elements, und
▪ einen Datensatz (JGAᵢ), geometrischer Trainingssatz genannt, welcher Daten bezüglich mindestens eines geometrischen Parameters für jede von mindestens zwei der optischen Grenzflächen (214₁-214₈) des Stapels von optischen Elementen (202-208) des optischen Trainingsobjektivs (200) umfasst; und
- eine Computereinheit (520) zum Trainieren eines Modells für die geometrische Charakterisierung (440) mit der Trainingsbasis (BA), mit den Trainingsmontagesätzen als Eingabe für das Modell und den geometrischen Trainingssätzen als Ausgabe des Modells.

12. Verfahren (600) für die geometrische Charakterisierung eines herzustellenden optischen Zielobjektivs (602), umfassend einen Stapel mehrerer optischer Elemente, wobei das Verfahren (600) **dadurch gekennzeichnet ist, dass** es die folgenden Schritte umfasst:
- Erhalten (606) eines Datensatzes (JA), Montagesatz genannt, welcher für jedes von mindestens zwei der optischen Elemente des Zielobjektivs einen Datensatz, Einzelsatz genannt, umfasst, umfassend mindestens einen charakteristischen Parameter des optischen Elements; und
- Bereitstellen (608), durch das Modell für die geometrische Charakterisierung (440), das durch das Verfahren nach einem der Ansprüche 1 bis 9 erhalten wird, das als Eingabe den Montagesatz (JA) eines Datensatzes (JGE), geschätzter geometrischer Satz genannt, nimmt, welcher Daten bezüglich mindestens eines geometrischen Parameters für jede von mindestens zwei der optischen Grenzflächen des Stapels von optischen Elementen des optischen Zielobjektivs umfasst.

13. Vorrichtung (700) für die geometrische Charakterisierung eines herzustellenden optischen Zielobjektivs (602), umfassend einen Stapel aus mehreren optischen Elementen, wobei die Vorrichtung (700) **dadurch gekennzeichnet ist, dass** sie umfasst:
- Mittel (702; 502) zum Erhalten eines Datensatzes (JA), Montagesatz genannt, umfassend, für jedes von mindestens zwei der optischen Elemente des Zielobjektivs (602), einen Datensatz, Einzelsatz genannt, der mindestens einen charakteristischen Parameter des optischen Elements umfasst; und
- das Computermodul (704) nach Anspruch 10, das den Montagesatz (JA) als Eingabe nimmt, zum Bereitstellen eines Datensatz (JGE), geschätzter geometrischer Satz genannt, welcher Daten bezüglich mindestens eines geometrischen Parameters für jede von mindestens zwei der optischen Grenzflächen des Stapels von optischen Elementen des optischen Zielobjektivs umfasst.

## Claims

1. Computer-implemented method (400) for obtaining a geometric characterization model (440) of a target optical objective (602) to be manufactured by stacking a plurality of optical elements, said method (400) being **characterized in that** it comprises:
- a phase (402) of creating a database (BA), referred to as a training database, of training datasets, each training dataset comprising, for an optical objective (200), referred to as a training objective, having the same architecture as the target optical objective (602):
▪ a dataset (JAAᵢ), referred to as a training assembly dataset, comprising, for each of at least two of the optical elements (202-208) of said training objective (200), a dataset, referred to as an individual dataset, comprising at least one characteristic parameter of said optical element (202-208), and
▪ a dataset (JGAᵢ), referred to as a training geometric dataset, comprising data relating to at least one geometric parameter for each of at least two of the optical interfaces (214₁-214₈) of the stack of optical elements (202-208) of the training optical objective (200); and
- a phase (420) of training a geometric characterization model (440) using said training database (BA), with the training assembly datasets as the input of said model and the training geometric datasets as the output of said model.

2. Method (400) according to the preceding claim, **characterized in that** at least one individual dataset of an optical element (202-208) of the training objective (200) comprises any combination of at least one of the following parameters:
- at least one optical parameter of said optical element;
- at least one geometric parameter of said optical element;
- at least one manufacturing parameter of said optical element.

3. Method (400) according to either of the preceding claims, **characterized in that** at least one parameter of an optical element (202-208) of the training optical objective (200) is:
- supplied by a supplier of said optical element,
- measured by a measuring device (504), or
- calculated on the basis of a digital modeling of said optical element.

4. Method (400) according to any of the preceding claims, **characterized in that** the training geometric dataset (JGAᵢ) comprises data for some or all of the raw optical measurement values obtained from the stack of optical elements (202-208) of the training objective (200).

5. Method (400) according to any of claims 1 to 3, **characterized in that** the training geometric dataset (JGAᵢ) comprises a value of at least one geometric parameter of an optical interface (214₁-214₈), in particular an embedded optical interface (214₂-214₈), of the training objective (200).

6. Method (400) according to any of the preceding claims, **characterized in that**, for at least one training dataset (JEᵢ), the training geometric dataset (JGAᵢ) is obtained by simulation on the basis of a digital modeling of a training optical objective (200).

7. Method (400) according to any of the preceding claims, **characterized in that**, for at least one training dataset (JEᵢ), the training geometric dataset (JGAᵢ) is obtained by measurement using a measuring apparatus (300; 512) on an actual training objective (200).

8. Method (400) according to any of the preceding claims, **characterized in that** the training database (BA) comprises at least one training dataset obtained from a training optical objective that is part of the same batch of optical objectives as the target objective during the manufacture of said batch of optical objectives.

9. Method (400) according to any of the preceding claims, **characterized in that** the geometric characterization model (400) comprises:
- a neural network (440), in particular a regression neural network, and more particularly a deep learning CNN,
- a linear polynomial regression model,
- a Gaussian equation obtained using a least-squares method, or
- a statistical analysis method.

10. Computer module (704) configured to execute the geometric characterization model (440) obtained using the method (400) according to any of the preceding claims.

11. Device (500) for obtaining a geometric characterization model of a target optical objective (602) to be manufactured by stacking a plurality of optical elements, said device (500) being **characterized in that** it comprises:
- means (502;510) for creating a database (BA), referred to as a training database, of training datasets, each training dataset (JEᵢ) comprising, for an optical objective (200), referred to as a training objective, having the same architecture as the target optical objective (602):
▪ a dataset (JAAᵢ), referred to as a training assembly dataset, comprising, for each of at least two of the optical elements (202-208) of said training objective (200), a dataset, referred to as an individual dataset, comprising at least one characteristic parameter of said optical element, and
▪ a dataset (JGAᵢ), referred to as a training geometric dataset, comprising data relating to at least one geometric parameter for each of at least two of the optical interfaces (214₁-214₈) of the stack of optical elements (202-208) of the training optical objective (200); and
- a computer unit (520) for training a geometric characterization model (440) using said training database (BA), with the training assembly datasets as the input of said model and the training geometric datasets as the output of said model.

12. Method (600) for geometrically characterizing a target optical objective (602) to be manufactured comprising a stack of a plurality of optical elements, said method (600) being **characterized in that** it comprises the following steps:
- obtaining (606) a dataset (JA), referred to as an assembly dataset, comprising, for each of at least two of the optical elements of said target objective, a dataset, referred to as an individual dataset, comprising at least one characteristic parameter of said optical element; and
- providing (608), using the geometric characterization model (440) obtained using the method according to any of claims 1 to 9 with said assembly dataset (JA) as input, a dataset (JGE), referred to as an estimated geometric dataset, comprising data relating to at least one geometric parameter for each of at least two of the optical interfaces of the stack of optical elements of the target optical objective.

13. Device (700) for geometrically characterizing a target optical objective (602) to be manufactured comprising a stack of a plurality of optical elements, said device (700) being **characterized in that** it comprises:
- means (702;502) for obtaining a dataset (JA), referred to as an assembly dataset, comprising, for each of at least two of the optical elements of said target objective (602), a dataset, referred to as an individual dataset, comprising at least one characteristic parameter of said optical element; and
- the computer module (704) according to claim 10 with said assembly dataset (JA) as input, to provide a dataset (JGE), referred to as an estimated geometric dataset, comprising data relating to at least one geometric parameter for each of at least two of the optical interfaces of the stack of optical elements of the target optical objective.
